# EUROPEAN PATENT APPLICATION

(11) **EP 4 734 635 A1**
(43) Date of publication of application: **29.04.2026**
(21) Application number: 24844296.4
(22) Date of filing: 24.04.2024
(51) Int. Cl.: H04W 72/0446

(54) **METHOD FOR TRANSMITTING TIME SLOT INFORMATION, ELECTRONIC DEVICE, AND STORAGE MEDIUM**

(30) Priority: 27.07.2023 CN 202310938796
(71) Applicant: ZTE Corporation, Shenzhen, Guangdong 518057 (CN)
(72) Inventor: LIU, Feng, Shenzhen, Guangdong 518057 (CN)
(74) Representative: Carangelo, Pierluigi
(86) International application number: PCT/CN2024/089591
(87) International publication number: WO 2025/020600

(57) **Abstract**

The present application provides a method for transmitting time slot information, an electronic device, and a storage medium. The method for transmitting time slot information is applied to a source end node and comprises: sending first time slot state information of N time slots to a downstream node by means of a cycle, wherein the cycle comprises N frame units, and one piece of the first time slot state information is correspondingly borne in one frame unit.

## Description

### CROSS-REFERENCE TO RELATED APPLICATION

This application is filed on the basis of the Chinese patent application No. 202310938796.4 filed July 27, 2023, and claims priority of the Chinese patent application, the entire contents of which are incorporated herein by reference.

### TECHNICAL FIELD

The present disclosure relates to, but is not limited to, the field of communication, in particular to a method for transmitting slot messages, an electronic device, and a storage medium.

### BACKGROUND

In telecommunication networks, a frame is typically employed to carry client services/traffic. A bearer frame is composed of several slots for carrying services/traffic. In practical service applications, with the increase or decrease of client service/traffic demands, the number of carrier slots needs to be adjusted accordingly.
manner. Specifically, each intermediate node between the endpoints sequentially negotiates and adjusts slots with its adjacent nodes. The system can respond to a client request to increase or decrease traffic requirements only after completion of all such sequential slot negotiations and adjustments. However, in practical applications, the increase or decrease of client traffic requirements is often uncertain. Because each slot negotiation and adjustment between two adjacent nodes requires a certain amount of time, the overall end-to-end slot negotiation process exhibits low efficiency and cannot respond to changes in client traffic requirements in a timely manner. Therefore, it is important to improve the efficiency of end-to-end slot negotiation.

### SUMMARY

The following is a summary of the subject matter described herein. This summary is not intended to limit the scope of protection of the claims.

Provided are a method for transmitting slot messages, an electronic device, and a storage medium in various embodiments of the present disclosure. The disclosed embodiments enable efficient transmission of slot messages, facilitate periodic transmission of state adjustment messages for all slots, and improve the efficiency of end-to-end slot negotiation.

According to a first aspect of the present disclosure, a method for transmitting slot messages is provided. The method is applied to a source node, and includes:
sending first slot state messages of *N* number of slots to a downstream node within one period, wherein the period is associated with *N* number of frame units, and one of the first slot state messages is carried over a respective one of the frame units.

According to a second aspect of the present disclosure, a method for transmitting slot messages is provided. The method is applied to an intermediate node, and includes:
receiving in one period, first slot state messages of *N* number of slots sent by an upstream node, wherein the period is associated with *N* number of frame units, and each of the first slot state messages is carried over a respective one of the frame units;
determining second slot state messages of the *N* number of slots, in response to determining that the first slot state messages of the *N* number time of slots meet a preset condition, and sending within one period, the second slot state messages of the *N* number time of slots to the downstream node, wherein each of the second slot state messages is carried over a respective one of the frame units; and
sending a slot adjustment rejection indication to the upstream node, in response to determining that the first slot state messages of the *N* slots do not meet the preset condition.

According to a third aspect of the present disclosure, a method for transmitting slot messages is provided. The method is applied to a destination node, and includes:
receiving in one period, first slot state messages of *N* number of slots sent by an upstream node, wherein the period is associated with *N* number of frame units, and each of the first slot state messages is carried over a respective one of the frame units.

According to a fourth aspect of the present disclosure, an electronic device is provided. The electronic device includes, a memory, a processor, and a computer program stored in the memory and executable on the processor which, when is executed by the processor, causes the processor to carry out
the method as described in the first aspect; or,
the method as described in the second aspect; or,
the method as described in the third aspect.

According to a fifth aspect of the present disclosure, a computer-readable medium is provided. The computer-readable medium stores a computer program thereon, which when executed by a processor, causes the processor to carry out
the method as described in the first aspect; or,
the method as described in the second aspect; or,
the method as described in the third aspect.

According to the embodiments of the present disclosure, a plurality of first slot state messages of N number of slots are sent to downstream nodes in one period, by the source node, with each of the N number of frame units carrying a respective one of the first slot state messages. This configuration allows intermediate nodes and destination nodes downstream to the source node to periodically receive and respond to first slot state messages associated with the N number of slots, thereby enabling periodic transmission of state adjustment messages for all slots within a frame unit. As a result, each network device is enabled to manage the state of all slots. Because the first slot state messages are transmitted on a frame-by-frame basis, the slots are decoupled, and slot negotiation and slot adjustment are likewise decoupled. Therefore, compared with conventional technologies, the embodiments of the present disclosure provide an efficient means of slot message transmission. The disclosed embodiments enable periodic transmission of state adjustment messages for all slots, thereby facilitating management of slot state by network devices and improving the efficiency of end-to-end slot negotiation.

### BRIEF DESCRIPTION OF DRAWINGS

FIG. 1 depicts a schematic diagram showing the transmission of a service carrying frame/carrier frame between nodes in the related technology;
FIG. 2 depicts a schematic diagram showing a frame in the related technology;
FIG. 3 depicts a flow chart showing slot negotiation and adjustment for reducing slot in the related technology;
FIG. 4 depicts a flow chart showing slot negotiation and adjustment for increasing slot in the related technology;
FIG. 5 depicts a schematic diagram showing a slot adjustment process according to an embodiment of the present disclosure;
FIG. 6 depicts a flowchart showing a method for transmitting slot messages, which is applied to a source node, according to an embodiment of the present disclosure;
FIG. 7 depicts a schematic diagram showing interaction of slot negotiation and adjustment between two adjacent nodes for increasing slots, according to in an embodiment of the present disclosure;
FIG. 8 depicts a schematic diagram showing a bearer frame according to an embodiment of the present disclosure;
FIG. 9 depicts a schematic diagram showing a failure in slot negotiation according to an embodiment of the present disclosure;
FIG. 10 depicts a flowchart showing a method for transmitting slot messages, which is applied to an intermediate node, according to an embodiment of the present disclosure;
FIG. 11 depicts a flowchart showing a slot adjustment and negotiation according to another embodiment of the present disclosure;
FIG. 12 depicts a schematic diagram showing interaction of slot negotiation and adjustment between two adjacent nodes for removing slots, according to in an embodiment of the present disclosure;
FIG. 13 depicts a schematic diagram showing interaction of slot negotiation and adjustment between two adjacent nodes for removing slots, according to in another embodiment of the present disclosure;
FIG. 14 depicts a schematic diagram showing interaction of slot negotiation and adjustment between two adjacent nodes in multiple periods, according to in an embodiment of the present disclosure;
FIG. 15 depicts a schematic diagram showing interaction of slot negotiation and adjustment between two adjacent nodes for transmitting the slot serial numbers of the slots for adjustment, according to in an embodiment of the present disclosure;
FIG. 16 depicts a flowchart showing a method for transmitting slot messages, which is applied to a destination node, according to an embodiment of the present disclosure; and
FIG. 17 depicts a schematic diagram showing an electronic device according to an embodiment of the present disclosure.

### DETAILED DESCRIPTION

The objectives, technical scheme and advantages of the present invention will become apparent through the following description for various embodiments in conjunction with the drawings. It should be understood that the embodiments described here are intended for illustration but not limitation of the present invention.

It should be noted that although the devices are shown with individual functional modules in the schematic diagram and the logical sequences are shown in the flow chart, in some cases, the devices can have different modules than those shown and the operations can be executed in a different order than those shown. It should be noted that the terms "first" and "second", if used in the description, the claims and the drawings are intended to distinguish similar objects, and do not necessarily imply any specific order or sequence.

The flowcharts as shown in the drawings are illustrative merely, and it is not necessary to include all the contents and operations/steps. And the operations/steps are not necessarily executed in the described order. For example, certain operations or steps may be subdivided, while others may be combined or partially combined. Accordingly, the actual execution order may vary depending on implementation circumstances.

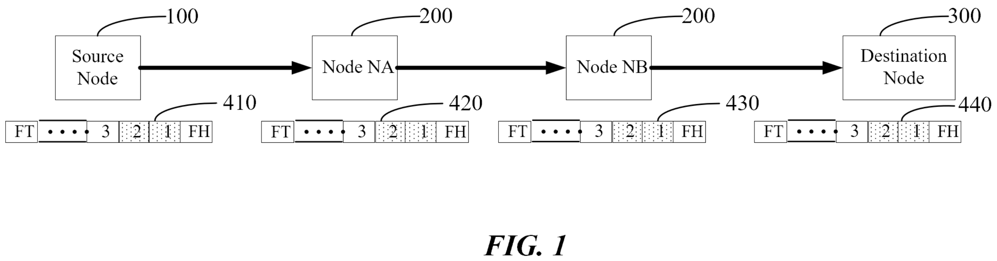

In telecommunication networks, the frame is typically employed to carry client's service. A carrier frame is divided into several slots for carrying services. FIG. 1 depicts a schematic diagram showing the transmission of a service carrying frame/carrier frame between nodes in the related art. As shown in FIG. 1, the nodes that carry client services are source node 100, destination node 300, and two intermediate nodes 200. Each node can be a node that supports international standard protocols, a slice packet network node that supports relevant technical definitions, or other types of bearer nodes. The carrier frames 410-440 each includes a frame header (FH), a container and a frame trailer (FT). The container of the carrier frame contains several slots, and the positions of the slots are fixed, which are transmitted in the network along with the carrier frame. Each client service can be carried in fixed slot(s), and different client services are carried in different slots that have different positions. When the client bandwidth is large, multiple slot positions are selected to carry the load, and when the client bandwidth is small, a few slot positions are selected to carry the load. When carrying the client service, source node 100 maps the client service to the corresponding slots in the carrier frame and sends them out. Intermediate node 200 forwards the slots. Destination node 300 extracts the client service from the corresponding slots to recover the initial client service.

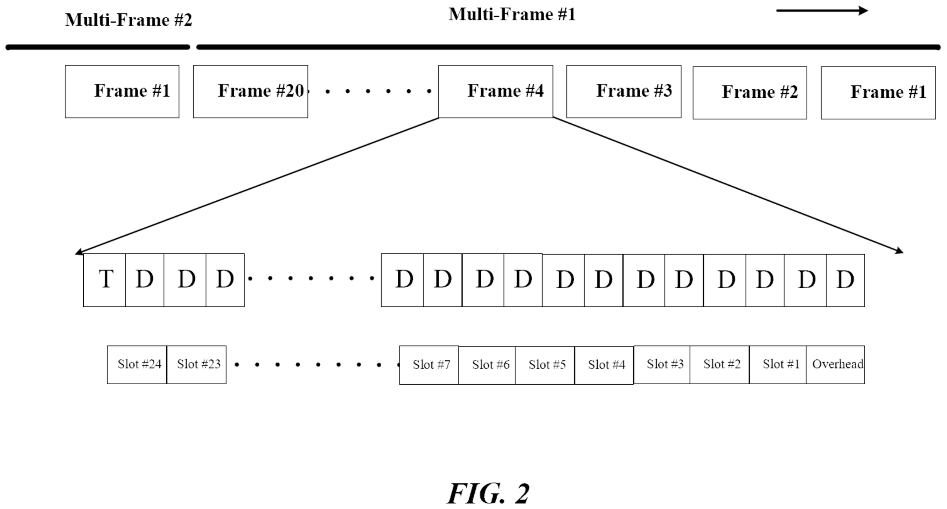

FIG. 2 depicts a schematic diagram showing a frame in the related technology. As shown in the figure, the carrier frame generally has a fixed frame structure. According to the frame structure in the standard file "Fine granularity slicing technical specification for Slicing Packet Network (SPN)", a carrier frame consists of one S-code block, 195 D-code blocks and one T-code block. S-code block, D-code block and T-code block are 66-bit code block formats defined by the 802.3 standard specification. Besides S-code block, D-code block and T-code block, O-code block and IDLE code block are also defined in the standard. One D-code block in the carrier frame is divided into an overhead (OH) byte and 24 slots. Every 20 frames form a multiframe, so there are 480 slots in a period. The overhead (OH) bytes in the carrier frame generally include the following information: Multi-frame indicator (MFI), General Communication Channel information (GCC), slot serial number information (Slot num), slot Configuration Request indication information (Configuration Request, CR), slot Configuration Acknowledge (CA), slot Configuration come into force (C), and slot increase adjustment notification (Send notice, S).

In practical service applications, the client bandwidth is small at the beginning, and the bandwidth of the required carrier pipeline is small, and only a few carrier slots are needed to meet the client's demand. After a period of time, with the increase of client traffic and bandwidth, more slots are needed to carry client traffic, so it is necessary to increase the number of slots without affecting or interrupting client traffic and complete the operation of increasing slots. On the other hand, for clients with declining service traffic, after a period of time, the bandwidth of the client's services decreases, and it is necessary to reduce the number of slots carrying services. Therefore, it is necessary to dynamically adjust the number of slots carrying client services without affecting client services.

In related technologies, slot negotiation and adjustment are performed in a hop-by-hop manner. That is, all nodes between the end points negotiate and adjust slots with one another in sequence. Because each negotiation is conducted for the adjusted slot, the system can only respond to a client's request to increase or decrease service traffic demand after completion of each slot negotiation and adjustment. However, in practical applications, the increase or decrease of client traffic requirements is often uncertain. Because each slot negotiation and adjustment between two adjacent nodes requires a certain amount of time, the overall end-to-end slot negotiation process exhibits low efficiency. Therefore, it is important to improve the efficiency of end-to-end slot negotiation. In view of this, provided are a method for transmitting slot messages, an electronic device, and a storage medium in various embodiments of the present disclosure. The disclosed embodiments enable efficient transmission of slot messages, facilitate periodic transmission of state adjustment messages for all slots, and improve the efficiency of end-to-end slot negotiation.

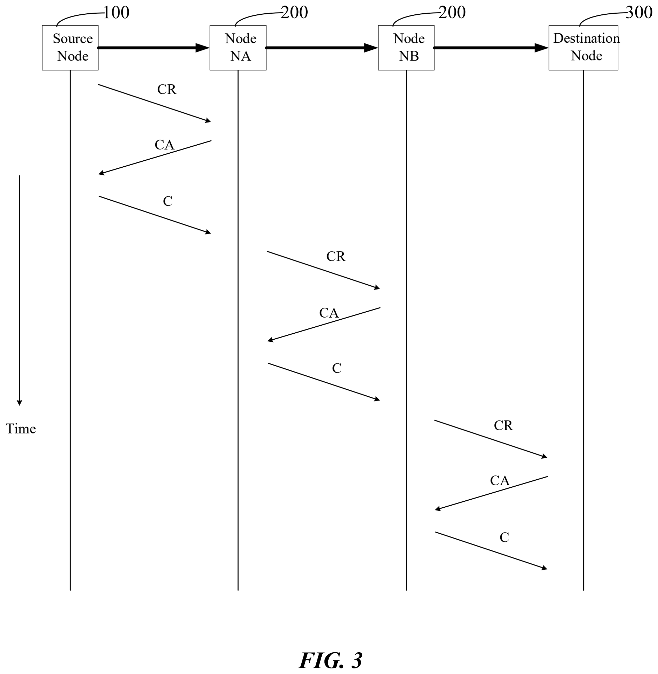

FIG. 3 illustrates a schematic diagram of the slot negotiation and adjustment process under the condition of reducing slot requirements in related technologies, in a hop-by-hop manner, for slot negotiation and adjustment. As shown in FIG. 3, the service-carrying nodes include a source node 100, a destination node 300, and two intermediate nodes 200, i.e., node NA and node NB. The destination node 300, node NA, and node NB are downstream nodes of the source node 100. When it is necessary to reduce the number of slots, the source node 100 sends to node NA, a Configuration Request (CR) signal carrying the slot serial number(s) for reduction, to notify the node NA with the slot serial number(s) for reduction. After receiving the CR signal, the node NA sends a Configuration Acknowledge (CA) signal to the source node 100 after completing the preparation. Once the source node 100 receives the CA signal from the node NA, the negotiation of slot reduction between the source node 100 and the node NA completes. The source node 100 sends a Configuration come into force (signal "C") to the node NA. Then the source node 100 and the node NA carry the client service according to the reduced slots and adjusted slot positions. When receiving the Configuration come into force, signal "C" from the source node 100, the node NA sends to the node NB, the CR signal along with the slot serial number(s) for reduction. After receiving CR signal, the node NB sends a CA signal to the node NA after completing the preparation. After the node NA receives the CA signal from the node NB, the negotiation of slot reduction between the node NA and the node NB completes. After receiving the CA signal from the node NB, the node NA sends a Configuration come into force, signal "C" to the node NB. Then node NA and the node NB carry the client service according to the reduced slots and adjusted slot positions. The above process continues, until the node NB and destination node 300 also complete the negotiation of slot reduction and the slot reduction adjustment process, so as to complete all the slot adjustment processes. At the same time, in the process of slot reduction and adjustment, the number of slots between upstream adjacent nodes is reduced first, and the slot reduction operation of downstream nodes is started only after the slot number of their upstream adjacent nodes is reduced, and the slot number between upstream nodes is always kept less than that between downstream nodes. In other words, the service bandwidth between upstream nodes is less than that between downstream nodes, thus avoiding the occurrence of service overflow at some node positions due to the fact that the upstream service bandwidth in the pipeline is greater than the downstream service bandwidth. Therefore, in the adjustment process, the end-to-end bandwidth reduction adjustment of the service is completed only after the nodes of the last two nodes complete the slot reduction adjustment. Therefore, slot negotiation and adjustment cannot proceed until the current client's request to reduce slots has been completed.

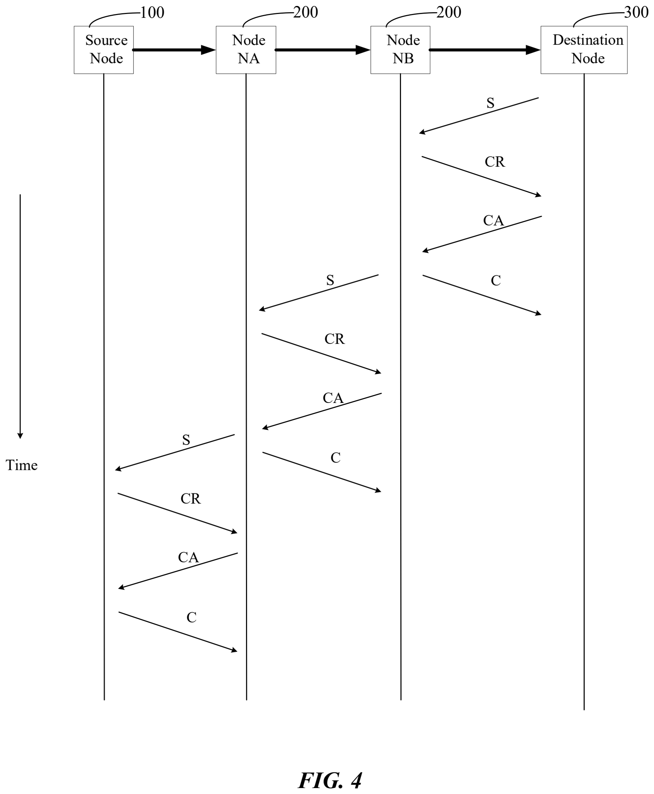

FIG. 4 illustrates a schematic diagram of the slot negotiation and adjustment process under the condition of increasing slot requirement, in a hop-by-hop manner, for slot negotiation and adjustment. Two intermediate nodes 200, i.e., node NA and node NB, are provided between the source node 100 and the destination node 300. The source node 100, node NA and node NB are upstream nodes of the destination node 300. As shown in FIG. 4, when it is desired to increase slots, in order to ensure that the service bandwidth between upstream nodes is smaller than that between downstream nodes, it is specified in the related art that during slot increase, the destination node 300 starts the slot increase adjustment, and sends the slot increase notification ("S signal") to the node NB. After receiving the "S signal", node NB starts the increase adjustment, and sends a CR signal along with the slot serial number for increase adjustment to the destination node 300. After receiving the CR signal, the destination node 300 replies with a CA signal to node NB after the preparation for slot configuration is done. After receiving the CA signal from node NB, the negotiation of slot increase and adjustment between the NB node and the destination node 300 completes. Node NB sends a Configuration come into force indication (C signal) to the destination node 300. Then node NB and the destination node 300 carry the client service according to the increased slots and adjusted slot positions. At the same time, node NB sends a slot increasement signal S to node NA. After receiving the signal S, node NA starts a negotiation for slot increasement, sends a slot configuration request indication (CR signal) to node NB, along with the slot serial number (s) of the slot(s) for increasement. After receiving the CR signal, node NB replies with a slot configuration acknowledgment indication (CA signal) to node NA after the preparation for slot configuration is done. Once node NA receives the CA signal from node NB, the negotiation of slot increasement and adjustment between NA node and node NB completes. Node NA sends a configuration come into force indication (C signal) to the node NB. Then node NA and node NB carry the client service according to the increased slots and adjusted slot positions. At the same time, node NA sends a slot increase notification (S signal) to the source node 100. Similar process is performed, and the overall slot increase adjustment processes are completed only when the negotiation of slot increase and the slot increase adjustment process between the source node 100 and node NA completes. The adjustment process is completed by negotiation and execution successively, segment by segment. In the adjustment process of increasing slots, the number of slots is always increased between downstream nodes first, and then between upstream nodes, and the number of slots between upstream nodes is always kept less than that between downstream nodes. That is, the service bandwidth between upstream nodes is less than that between downstream nodes, so as to avoid service overflow caused by the fact that the upstream service bandwidth is greater than the downstream service bandwidth in the pipeline. In the slot increase adjustment process, the end-to-end bandwidth increase adjustment of the service is completed only after the nodes of the last two nodes complete the slot increase adjustment. Therefore, end-to-end slot negotiation requires that slot negotiation and slot adjustment be completed sequentially between each pair of adjacent nodes, resulting in a relatively long end-to-end negotiation time.

As can be seen from the slot negotiation and adjustment process corresponding to FIG. 3 and FIG. 4, the bandwidth adjustment process in the related technology is completed by negotiation and execution successively, segment by segment. The adjustment for a subsequent segment can be started only after adjustment of a previous segment is completed, which takes a lot of time. At the same time, segment-by-segment negotiation and segment-by-segment adjustment bring a disadvantage. Some nodes have already completed the adjustment, while some nodes encounter unexpected situations during the adjustment process. For example, in some cases, CR signals and CA signals are lost due to interference during the adjustment process. Alternatively, in some cases, a node fails to send the CA signal in time when it encounters failures, which leads to the failure of negotiation between upstream and downstream nodes. Under the above circumstances, when the negotiation of slot adjustment between some nodes fails, the subsequent slot adjustment cannot be carried out. As such, some nodes with successful adjustment carry services according to the new slot number, while some other nodes carry services according to the old slot number, resulting in inconsistent end-to-end carrier bandwidth of services. In the case that the negotiation between some of the above nodes fails and the slot adjustment of the subsequent nodes fails, generally, a fallback mechanism should be started. According to the slot adjustment process, the nodes that have been successfully adjusted will be returned to the original unadjusted slot state by adopting the method of adjusting the slots with the opposite number. For example, if the adjustment for some nodes is successful and the adjustment for some other nodes fails in the slot increase adjustment, the slot decrease adjustment will be started for the nodes whose adjustment is successful, and the increased slot will be deleted according to the slot decrease mechanism, thus completing the slot fallback. Similarly, if the adjustment for some nodes is successful and the adjustment for some other nodes fails in the slot decrease/reduction adjustment, slot increase adjustment will be started for the nodes whose adjustment is successful, and the decreased slot will be added according to the slot increase mechanism, thus completing the slot fallback. However, the slot fallback process is also very complicated. Sometimes, in the fallback process, the fallback adjustment may fail again and the fallback cannot be continued, resulting in the dilemma that neither the end-to-end slot adjustment nor the end-to-end slot fallback can be completed. Meanwhile, in networking of the devices provided by different vendors, variations in internal processing mechanisms render slot adjustment negotiations more susceptible to failure. In addition to the time-consuming hop-by-hop adjustment, such failures further increase the time required for end-to-end slot negotiation. Accordingly, the efficiency of end-to-end slot adjustment is low in related technologies.

In view of this, a method for transmitting slot messages, an electronic device, and a computer-readable storage medium is provided according to the embodiments of the present disclosure. According to the embodiments of the present disclosure, a plurality of first slot state messages of *N* number of slots are sent to downstream nodes in one period, by the source node 100, with each of the N frame units carrying a respective one of the first slot state messages. This configuration allows intermediate nodes 200 and destination node 300 downstream to the source node 100 to periodically receive and respond to first slot state messages associated with the N number of slots, thereby enabling periodic transmission of state adjustment messages for all slots within a frame unit. As a result, each network device is enabled to manage the state of all slots. Because the first slot state messages are transmitted on a frame-by-frame basis, the slots are decoupled, and slot negotiation and slot adjustment are likewise decoupled, thus eliminating the need for hop-by-hop slot negotiation and adjustment. Therefore, compared with conventional technologies, the embodiments of the present disclosure provide an efficient means of slot message transmission. The disclosed embodiments enable periodic transmission of state adjustment messages for all slots, thereby facilitating management of slot state by network devices and improving the efficiency of end-to-end slot adjustment.

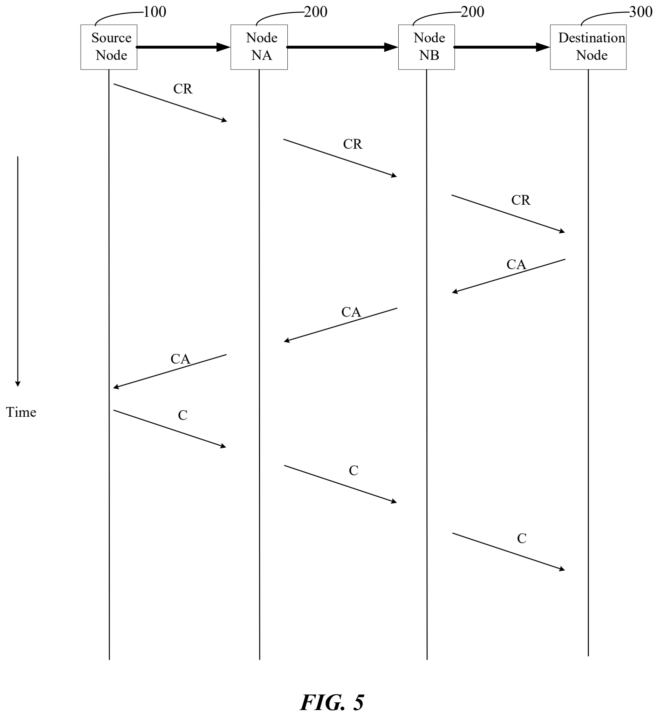

The method according to various embodiments of the present disclosure can be applied in the application environment of carrying client services based on the slot method shown in FIG. 1. FIG. 5 depicts a flowchart showing a method for data transmission according to an embodiment of the present disclosure. In the embodiment as shown, the service carrying nodes include four network nodes, i.e., a source node 100, two intermediate nodes 200 (node NA and node NB, respectively), and a destination node 300. In an application where a service is carried, the service carrying starts from the source node 100, to node NA and node NB, and ends at the destination node 300. Node NA, node NB, and destination node 300 are downstream nodes of the source node 100. Similarly, the source node 100, node NA, and node NB are upstream nodes of the destination node 300. It can be understood that in practical application scenarios, more intermediate nodes 200 may be provided between the source node 100 and the destination node 300, while embodiments of the present disclosure are illustrated with two intermediate nodes 200 by way of an example.

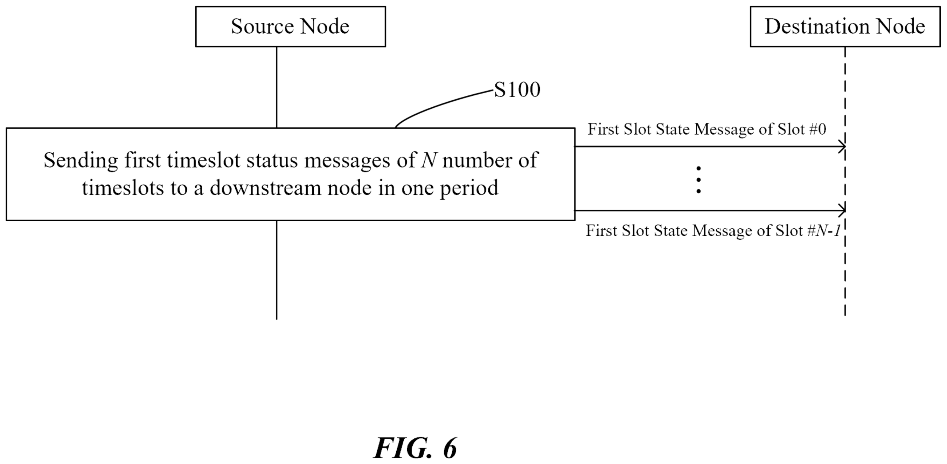

According to an embodiment, a method for data transmission is provided. The method is performed by the source node 100. As shown in FIG. 6, the method includes operation S100 where, first slot state messages about *N* number of slots are sent to a downstream node in one period. During each period, at least *N* number of frame units are transmitted, and each of the N number of frame units carries a respective one of the first slot state messages. N is the number of slots contained in a bearer frame. In an example where a bearer frame contains 480 slots, then at least 480 frame units must be transmitted within that period. Therefore, by the periodical transmission of the first slot state of each slot, the negotiation of each slot is decoupled from the slot adjustment. This provides an efficient means of transmitting slot information, enabling the periodic transmission of the state adjustment information of each slot. As such, the network devices are allowed to manage the state of all slots while improving the efficiency of end-to-end slot adjustment.

It should be noted that, the first slot state information may be carried in the overhead of the bearer frame or otherwise, and the present disclosure is not limited thereto. In the following embodiments, the first slot state information is carried in the overhead.

It should be noted that, in some embodiments, the transmission order of each frame unit within a period has a one-to-one mapping relationship with the slot corresponding to the first slot state messages carried in the frame unit. For example, the first slot state message corresponding to slot #0 may be transmitted over frame #0. It should be noted that in some embodiments, the actual states of the *N* number of slots is set in the first slot state messages. In some other embodiments, only the first slot state messages of the slot to be adjusted represents the actual states, and the first slot state messages of the rest of the slots are null or invalid.

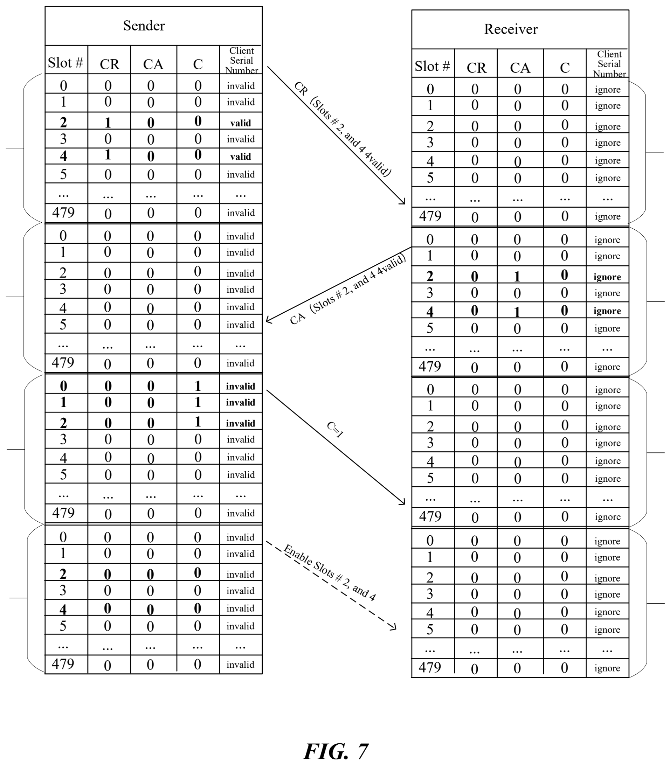

In an example in which a multiframe includes 480 frame units, reference is made to FIGS. 5 and 7. FIG. 5 illustrates the interaction process of slot negotiation and slot adjustment among service carrying nodes in the present disclosure, while FIG. 7 illustrates the interaction process of slot state messages carried in frame units between two adjacent network nodes. In FIG. 7, each row corresponds to the first slot state message of a slot, and each of the parentheses corresponds to one period. As shown in FIGS. 5 and 7, within one period, the source node 100 sends the first slot state message of slot #0 to the node NA over the 0th frame unit, the first slot state message of slot #1 to the node NA in the 1st frame unit, the first slot state message of slot #2 to the node NA in the 2nd frame unit, and so on,... and the first slot state message of slot #479 to the node NA in the 479th frame unit, thus completing the transmission of the slot state messages of all slots to the node NA in one period.

In another example where a multiframe consists of 512 frame units, each frame unit in the first 480 frame units carries a first slot state message of a respective one slot, such that the adjustment indications for the 480 slots are transmitted. No slot state message of the following 32 frame units is transmitted. The slot negotiation and slot adjustment process involving the first slot state messages of the first 480 frame units can refer to the slot negotiation and slot adjustment process within one period for the multiframe of 480 frame units as described above.

It is understood that, in the method according to the present disclosure, the first slot state message of each slot will be periodically transmitted, no matter whether a respective slot is involved in the adjustment.

In shall be understood that, in practical applications, since the available slots of each network node may be the same or different, in some embodiments, the first slot state messages initiated by the source node 100 may be directly forwarded by a downstream node. Alternatively, a second slot state message may be determined instead, according to the actual slot availability state, and the second slot state message may be sent to a downstream node for indication of the adjustment, such that the request for increase or decrease in bandwidth requested by the source node 100 can accordingly cause a bandwidth increase or decrease at the downstream node.

Therefore, the method set forth herein enables the transmission of first slot state messages for the N number of slots to downstream nodes within a single period in response to changes in client traffic requirements. The end-to-end slot negotiation among service-bearing nodes are performed and slot adjustments are determined based on the negotiation results. In this way, the time required for end-to-end slot negotiation is reduced, thereby improving overall negotiation efficiency.

In some embodiments, a period refers to a frame period, which is associated with a fixed number of frame units. In some other embodiments, a period refers to a time period, which is associated with frame units of a fixed duration/time length. In an example where the number of frame units contained in a multiframe is fixed, the period refers to the frame period. In another example where a fixed time is set as the period during which the at least N frame units are transmitted, the period refers to a time period. In another example where a specific identifier carried in a frame is identified as the start or end point of a period, the period refers to a frame period.

It shall be understood that, each first slot state message is information used by an upstream node to record the state of slot negotiation and adjustment processes for a respective one slot. The corresponding first slot state message initiated by the node at different stages is different. Therefore, the first slot state of the source node 100 as one of the upstream nodes, includes at least one of: slot adjustment request indication, slot adjustment implement message, or slot adjustment type indication. In particular, the slot adjustment request indication is intended to indicate the adjustment request for the slot to be adjusted (corresponding to CR as shown in FIG. 5). The slot adjustment implement message is intended to indicate the downstream node to perform the corresponding slot adjustment policy (corresponding to C as shown in FIG. 5). The slot adjustment type indication is intended to indicate whether the slot adjustment is to add or delete a slot (corresponding to the state of the client code as shown in FIG. 7). It should be noted that one or both of the slot adjustment type indication and slot adjustment application indication may be provided to indicate the need for slot adjustment. Referring to FIG. 5, in an example where slot adjustment is required during the slot negotiation , the first slot state message of the source node 100 includes the slot adjustment request indication. The slot adjustment request indication CR is transferred from the source node 100 to the node NA, until the slot adjustment request indication CR reaches the destination node 300. When the negotiation between the source node 100 node NA, node NB and destination node 300 successes, the destination node 300 issues a slot adjustment acknowledge message CA corresponding to the slot adjustment request indication sent by node NA to node NA until the source node 100 receives the slot adjustment acknowledge message CA corresponding to the issued slot adjustment request indication. Then the source node 100 sends slot adjustment come into force message C to the downstream nodes. At this time, the first slot state message includes slot adjustment come into force message C.

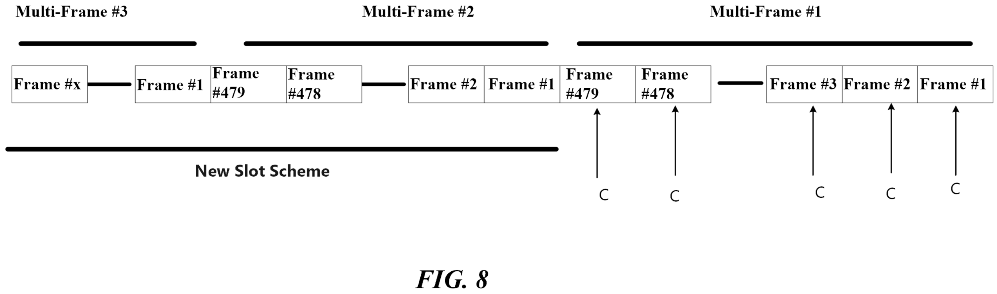

Referring to FIGS. 5 and 7, in an example where slots #2 and #4 are actually involved in slot adjustment, the value of the slot adjustment request indication CR in the first slot state message corresponding to slots #2 and #4 is set to '1', indicating that slot adjustment is requested. The values of the first slot state messages corresponding to rest slots other than slots #2 and #4 are set to '0', indicating that those slots do not involve in slot adjustment. In addition, the client number corresponding to the slot adjustment type indication in the first slot state message corresponding to slots #2 and #4 changes from the previous invalid state to a valid state, indicating slot increasement. Accordingly, referring to FIG. 5, for the downstream nodes of the source node 100: when the source node 100 transmits the slot adjustment request indications CR for all slots to node NA within one period, node NA, after receiving all those messages, transmits the slot adjustment request indications CR for all slots to the node NB within one period. Node NB, after receiving the messages CR, transmits the slot adjustment request indications CR for all slots to the destination node 300 within one period. After receiving the slot adjustment request indications CR for all slots, the destination node 300 sends back the slot adjustment acknowledgment indication CA for all slots to the node NB. The node NB, after receiving the information CR, replies with the slot adjustment acknowledgment indications CA for all slots to the node NA within one period. Node NA, after receiving the messages CA, relies with the slot adjustment acknowledgment indications CA for all slots to the source node 100 within one period. The source node 100 receives the slot adjustment acknowledgment indications for all slots within one period. Since only slots #2 and #4 are involved in the adjustment, in the slot adjustment acknowledge message (CA) sent back by each network node, only the slot adjustment acknowledge message (CA) for slots #2 and #4 is valid (i.e., the value of CA message = '1'), while the slot adjustment acknowledge messages for the rest of the slots are invalid (i.e., the value of CA message = '0'). After receiving all the replied acknowledgment indications in one period, the source node 100 continues the procedure with sending a plurality of signals C having the value of '1' in the subsequent period. As shown in FIG. 7, the indication signal C are transmitted over the first three frames of the multiframe, i.e., frame #0, frame #1, and frame #2. As shown in FIG. 8, the slot adjustment come into force messages C for all frame units are transmitted within one period. As shown in FIG. 7, after the period at which signals C having the value of '1' are carried ends, slots #2 and #4 will carry client services in the subsequent period.

In an embodiment, before sending the first slot state messages of the N number of slots to a downstream node in one period, the method further includes: determining at least one slot to be adjusted from the N slots and a target adjustment state corresponding to the slot to be adjusted; providing a slot adjustment request indication in a first slot state message corresponding to the slot to be adjusted, where the slot adjustment request indication indicates an adjustment requirement for the slot to be adjusted; and providing a slot adjustment type indication in the first slot state message corresponding to the slot to be adjusted, where the value of the slot adjustment type indication is related to the target adjustment state corresponding to the slot to be adjusted.

Referring to FIG. 7, in an example where the source node 310 serves as a sender, and a downstream node of the source node 310 serves as a receiver, when slot #2 and slot #4 are added slots, it can be determined that the target adjustment state is increasement, and the slots to be adjusted are slot #2 and slot #4. Accordingly, the values of the slot adjustment request indications CR of slot #2 and slot #4 are set to '1', indicating that a request for slot adjustment. The values of the slot adjustment request indications of the rest slots are set to '0', indicating that those slots do not involve in the slot adjustment. Accordingly, the values of the slot adjustment type indications (i.e., "client Number" shown in FIG. 7) for slots #2 and #4 are set to "Valid" to indicate slot increasement.

In some embodiments, the source node 100: receives second slot state messages of N slots sent by the downstream node in one period, with one second slot state message corresponding to one frame unit; obtains the second slot state message of a slot to be adjusted from the second slot state messages of the N slots; sends slot adjustment come into force message to the downstream node in one period, when the second slot state message of the slot to be adjusted contains a slot adjustment acknowledgment indication, and adjusts the slot to be adjusted to the target adjustment state in the subsequent period to the period at which the slot adjustment come into force message is sent; where the slot adjustment come into force message is intended to indicate instruct the downstream node to perform the corresponding slot adjustment policy. It should be noted that the period at which the slot adjustment come into effect message is sent can be the nth period (n is greater than or equal to 1) after the period at which the second slot state message is received, and the present disclosure is not limited thereto.

It should be noted that the slot adjustment acknowledgment indication is a response to the slot adjustment request indication where the request complies with certain requirement.

Referring to FIG. 7, in an example where the source node 100 as the sender and node NA downstream to the source node 100 serves as a receiver, the source node 100 sends CR messages to the node NA to increase/activate slot #2 and slot #4. The adjustment for slot #2 and slot #4 can be performed once the end-to-end adjustment negotiation is completed. In such a case, node NA sets the value corresponding to the slot adjustment acknowledgment indication CA in the second slot state information to '1'. After receiving the second slot state message sent by node NA, the source node 100 sends a slot adjustment come into force message C having a value of '1' in the subsequent period to indicate that slot #2 and slot #4 are enabled. At this point, after receiving the slot adjustment come into force message sent by the source node 100, node NA adds slot #2 and slot #4 in the subsequent period.

In an embodiment, the slot adjustment come into force message can be carried in one or more frame units within a period and sent. Those having ordinary skills in the art can selectively set the number of frame units carrying slot adjustment come into force message according to actual needs. The greater the number of slot adjustment messages, the lower the probability of loss at downstream nodes, thereby further enhancing the efficiency of end-to-end slot negotiation.

FIG. 8 depicts a schematic diagram showing a bearer frame according to an embodiment of the present disclosure. The carrier frame is a multiframe consisting of 480 frames. In this multiframe, each frame carries a slot adjustment come into force message C, thus the slot adjustment come into force message C is transmitted for 480 times. Therefore, when multiple transmission indication signals C are used, even if a bearer frame is lost due to bit errors or other reasons, as long as the slot adjustment come into force message C of one bearer frame is transmitted to the downstream node, the downstream node can perform slot adjustment and continue to send transmission indication signal C downstream, thus avoiding adjustment interruption. In an application, if the slot adjustment come into force message is received in the current period, the adjustment will be started from the first frame position in the subsequent period, and both upstream and downstream nodes will employ the new slot scheme to process services in the first frame in the subsequent period. The slot adjustment come into force message is given one period in advance to reserve time for the slot adjustment and change. In an application, in order to improve the reliable transmission of the slot adjustment come into force message C, if an upstream node receives a failure indication signal sent back by a downstream node indicating an error code or failure between the upstream and downstream nodes when the upstream node sends the slot adjustment come into force message C, the link between the upstream and downstream nodes is unreliable, the upstream node can repeatedly send the slot adjustment come into force message C until the failure ends, thus avoiding the loss of the slot adjustment come into force message C caused by the link failure between the upstream and downstream nodes. Referring to FIG. 7, in an example, the slot adjustment come into force message C can be carried/ provided in the first three frames only.

In some embodiments, a client number is carried during the slot negotiation. When the target adjustment state is valid, indicating that the corresponding slot is enabled to carry the target client signal, the adjustment of the slot to be adjusted to the target adjustment state includes:
adding the slot to be adjusted to the bearer slot set corresponding to the target client signal to obtain a new bearer slot set; and
carrying the target client signal over the bearer slot set.

For example, referring to FIG. 7, the value corresponding to the field of "Client Serial Number" "Valid", indicates that the target adjustment state is valid. In an example where the bearer slot set of the target client on the source node 100 is U1={1}, and the slots to be adjusted are slot #2 and slot #4, then in the effective state, the new bearer slot set is {1,2,4}. In such a case, when the target client signal is transmitted at the source node 100, slots #1, #2 and #4 are used for service transmission.

In an embodiment, after obtaining the new bearer slot set, the method at the source node 100 further includes:
increasing the bandwidth for the target client signal to obtain the target client signal with increased bandwidth, at the beginning of the subsequent period to the period at which the slot adjustment come into force message is sent; and
carrying the target client signal with increased bandwidth over the new bearer slot set.

In an example where the source node 100 sends the slot adjustment come into force message in period T1, the source node 100 starts to adjust the bandwidth in period T2 and carries the target client signal through the adjusted bandwidth. T2 and T1 are separated by one period. The target client signal carries the traffic of the target client. Therefore, by means of the slot adjustment come into force indication C delayed by one period, the actual effective slots of each node can increase or decrease synchronously with the service flow, thereby reducing the risk of service/ traffic queuing.

In some embodiments, a client number is carried during the slot negotiation. When the target adjustment state is invalid, indicating that the corresponding slot to carry the target client signal is disabled, the adjustment of the slot to be adjusted to the target adjustment state includes:
when the target adjustment state corresponding to the slot to be adjusted is invalid, the slot to be adjusted is deleted from the bearer slot set corresponding to the target client signal, to obtain a new bearer slot set; and
carrying the target client signal over the new bearer slot set excluding the slot to be adjusted, at the beginning of the subsequent period to the period at which the slot adjustment come into force message is sent.

In an example where the current period is T1, the slot to be adjusted is slot #1, and the bearer slot set is {1,2,4}; then the new bearer slot set is {2,4}; and the target client signal is transmitted over slots #2 and #4 during T2.

It shall be understood that the slot adjustment acknowledgment indication contained in the second slot state message received by the source node 100 may be directly from the destination node 300 or may be generated by the destination node 300 and forwarded by the intermediate node 200.

In some cases, the slot negotiation may fail due to the different slots available at the network nodes. In some embodiment, when receiving the second slot state message of the slot to be adjusted, which contains slot adjustment rejection information, the source node 100 provides slot adjustment request indication and slot adjustment type indication in sixth slot state message corresponding to the slot to be adjusted among the sixth slot state messages of N number of slots sent to the downstream node in one period. The value of the slot adjustment type indication is related to the opposite state of the target adjustment state. One sixth slot state message is carried in one frame unit. In an embodiment, the period at which a sixth slot state message is sent can be the nth period (n is greater than or equal to 1) after the period at which the second slot state message is received, and the present disclosure is not limited thereto.

It should be noted that the slot adjustment rejection message comes directly from intermediate node 200 or from destination node 300. Alternatively, the slot adjustment rejection message is generated by an intermediate node 200 and forwarded by another intermediate node 200. Alternatively, the slot adjustment rejection message is generated by the destination node 300 and forwarded by an intermediate node 200. If the negotiation fails an at an intermediate node 200, the slot adjustment rejection message will be issued by the intermediate node 200. If the destination node 300 receives the slot adjustment request indication and determines that the negotiation has failed, the destination node 300 generates a slot adjustment rejection message.

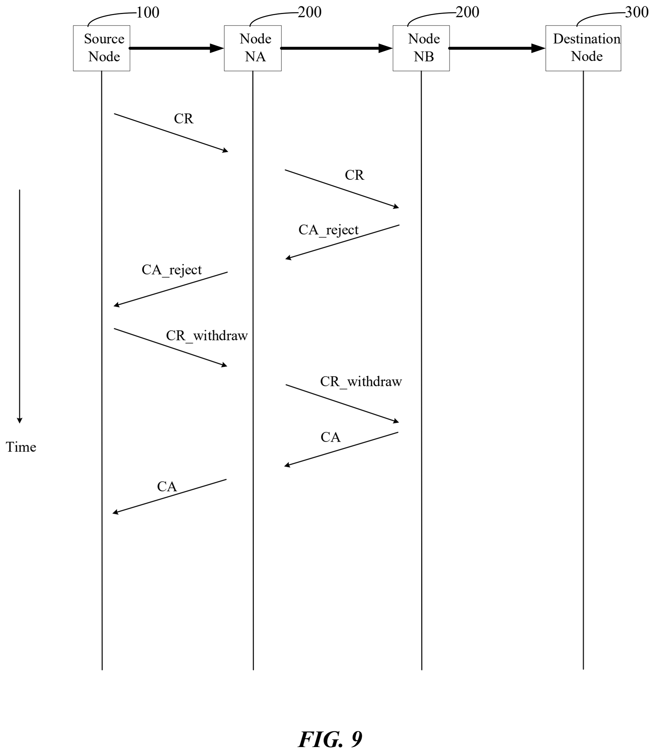

In an example, under normal circumstances, the source node 100 can transmit all slot adjustment request indications (including valid CR messages for slots that need adjustment and invalid CR messages for slots that do not need adjustment) within one period. The intermediate nodes 200 parse and forward the messages to the downstream node, and those messages ultimately reach the destination node 300. The destination node 300 can also transmit all slot adjustment acknowledgment indications (including valid CA messages for slots that need adjustment and invalid CA messages for slots that do not need adjustment) within one period. The intermediate node 200 forwards the slot adjustment acknowledgment indications to the upstream nodes, and those messages ultimately reach the source node 100. In some special or abnormal situations, an intermediate node 200 or destination node 300 may determine that the slot adjustment request issued by the source node 100 cannot be met, and the slot adjustment request is rejected. In this case, the received second slot state message of the slot to be adjusted contains the slot adjustment rejection message. Referring to FIG. 9, in an example where the source node 100 requests to add 10 slots, and there are enough spare slots between the source node 100 and node NA to satisfy the request, and there are enough spare slots between node NA and node NB to satisfy the request. The adjustment request can be forwarded. However, there are not enough spare slots between node NB and destination node 300 to satisfy the adjustment. Node NB does not forward the slot adjustment request indication to destination node 300, and the slot adjustment request is rejected. In this case, Node NB directly replies with a slot adjustment rejection message (e.g., CA_reject signal) to the upstream node. After receiving the CA_reject signal, Node NA transfers the CA_reject signal to the upstream node, and the CA_reject signal ultimately reaches the source node 100. That is, the second slot state message received by the source node 100 contains the slot adjustment rejection message. Then, the source node 100 determines that the slot adjustment request has failed. At this point, the previous slot adjustment request shall be withdrawn. Therefore, at the start of another period, the source node 100 sends a new slot adjustment request (along with the sixth slot state) to the downstream node. The slot adjustment request indication CR carried in the sixth slot status is the same, and the value of the slot adjustment type indication is the opposite to that of the previous slot adjustment type indication. For example, if the previous request was to add 10 slots from slot #1 to slot #10, then the current request is to delete 10 slots from slot #1 to slot #10, that is, to withdraw the previous adjustment request for the corresponding slots. Node NA receives the new slot adjustment request indication (CR signal) and the slot adjustment type indication corresponding to the request withdrawal signal (CR_withdraw) as shown in FIG. 9, and forwards the CR_withdraw signal to node NB. When receiving the request withdrawal signal CR_withdraw, node NB compares the withdrawal content with the previous request (the opposite of the slot adjustment content). Previously, node NB returns a slot adjustment rejection message CA_reject, and was the initiating device for sending CA_reject. Now, node NB stops returning the slot adjustment rejection message CA_reject and instead returns a slot adjustment acknowledgment indication CA to node NA. Node NA receives and transfers the slot adjustment acknowledgment indication CA to the source node 100. The source node 100 receives the response state information CA, confirms that the slot adjustment request withdrawal operation is complete, and stops sending the request withdrawal signal CR_withdraw, and the entire slot adjustment is finished.

It shall be noted that, if the second slot state message of the slot to be adjusted does not carry slot adjustment acknowledgment information or slot adjustment rejection information, the source node 100 periodically sends the slot adjustment request indications and slot adjustment type indications corresponding to the slot to be adjusted through one or more subsequent periods until receiving the slot adjustment acknowledgment indication or slot adjustment rejection information corresponding to the slot to be adjusted.

It should be noted that during signal transmission, slot adjustment request indication information and slot adjustment type indication may be lost due to link quality or other reasons, which may lead to slot negotiation failure. Therefore, the periodical sending of the slot adjustment request indication and slot adjustment type indication corresponding to the slot to be adjusted before receiving a slot adjustment acknowledgment indication or a slot adjustment rejection message can further increase the success rate of slot negotiation.

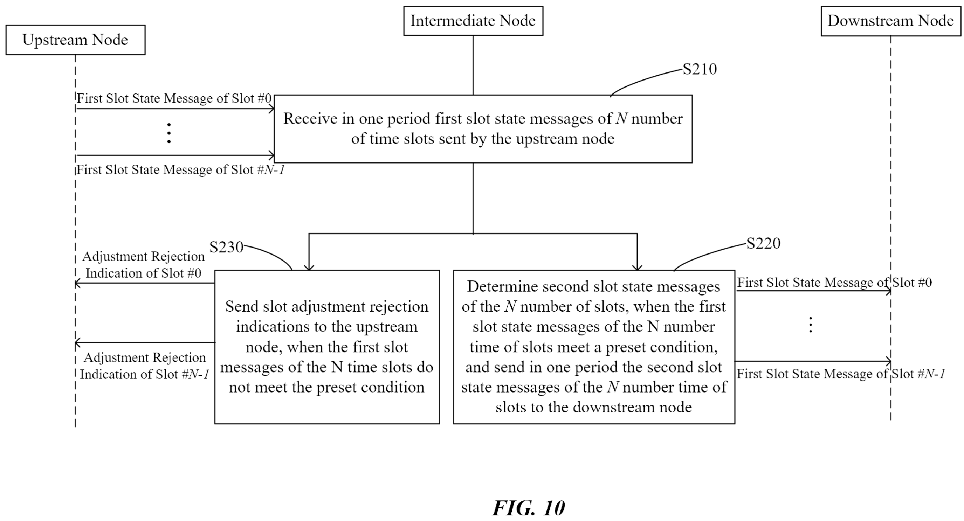

As shown in FIG. 10, according to an embodiment, a method for transmitting slot messages is provided. The method is performed by an intermediate node 200 between the source node 100 and the destination node 300. The method includes the following operations.

At operation S210, first slot state messages of N number of slots sent by the upstream node in one period are received, where the period is associated with N number of frame units, and each of the first slot state messages is carried in a respective one of the frame units.

At operation S220, second slot state messages of the N number of slots are determined, when the first slot state messages of the *N* number time of slots meet a preset condition, and the second slot state messages of the *N* number time of slots are sent to the downstream node through one period, where each of the second slot state messages is carried in a respective one of the frame units.

At operation S230, a slot adjustment rejection message is sent to the upstream node, when the first slot state messages of the N slots do not meet the preset condition.

In an embodiment, the period at which a second slot state message is sent can be the nth period (n is greater than or equal to 1) after the period at which the first slot state message is received, and the present disclosure is not limited thereto.

Referring to FIG. 5, in an example where the slot adjustment is initiated by the source node 100, the source node 100 sends the first slot state messages to the downstream nodes. Node NA, as one of the intermediate nodes 200 and the first downstream node of the source node 100, determines that the first slot state messages meet the preset condition after receiving those messages from the source node 100 and starts the preparation work. However, node NA does not immediately return the slot adjustment acknowledgment indication CA to the source node 100. Instead, node NA sends the second slot state message containing the slot adjustment request signal CR to its downstream node NB. Similarly, after receiving the second slot state messages from the node NA (i.e., the first slot state information corresponding to the upstream node), the node NB determines that the second slot state messages meet the preset condition and starts the preparation work. Instead of immediately returning the slot adjustment acknowledgment indication CA to node NA, node NB sends the regenerated second slot state messages to the destination node 300, which is the downstream to node NB. After receiving the slot state messages sent by the node NB, the destination node 300 determines that those messages meet the preset condition, and then returns the slot adjustment acknowledgment indication CA along with the serial number(s) of the adjusted slot(s) to node NB. Correspondingly, after receiving the slot adjustment acknowledgment indication CA from the destination node 300, the node NB returns the slot adjustment acknowledgment indication CA along with the serial number(s) of the adjusted slot(s) the upstream node NA. Similarly, after receiving the slot adjustment acknowledgment message CA from its downstream node (i.e., node NB), node NA returns the slot adjustment acknowledgment indication CA along with the serial number(s) of the adjusted slot(s) to the upstream source node 100. After receiving from downstream node, the slot adjustment acknowledgment indication CA along with the serial number(s) of the adjusted slot(s), the source node 100 determines that the returned slot serial numbers match the requested slot serial numbers, and determines that the negotiations between the source node 100 and the destination node 300, as well as the negotiations between the intermediate nodes have been completed, and the slot adjustment negotiation between all nodes is successful. At this point, the source node 100 starts to send the slot adjustment come into force message C to the downstream node. If the adjustment negotiation between some devices in the network fails, the source node 100 will not receive the slot adjustment acknowledgment indication CA. Therefore, the source node 100 will not send the slot adjustment come into force message C. The devices will not carry client services according to the new number of slots. Instead, the devices will still carry client services according to the original number of slots. This avoids the problem of end-to-end bandwidth inconsistency caused by the success of negotiation between some devices and the failure of negotiation between some other devices in traditional slot adjustment, as well as the rollback issue of slot adjustment. If negotiation between some devices in the network fails and the source node 100 cannot receive the slot adjustment acknowledgment indication CA, the source node 100 may repeatedly or periodically send the slot adjustment request signal CR until it receives the slot adjustment acknowledgment indication CA. If the source node 100 fails to receive the slot adjustment acknowledgment indication CA within a preset period of time, the source node 100 considers the end-to-end link to be faulty, stops sending the slot adjustment request signal CR, and terminates the slot adjustment. When the source node 100 receives the slot adjustment acknowledgment indication CA and the adjusted slot serial number from the downstream node, and confirms that the returned slot serial number is consistent with the requested slot serial number, the source node 100 sends the slot adjustment come into force message C to the downstream node. The source node 100 also carries the client services according to the new slot scheme. When receiving the slot adjustment come into force message C, the downstream node also forwards client services according to the new slot scheme. At this point, the slot adjustment between the source node 100 and node NA is done. When receiving the slot adjustment come into force message C from upstream source node 100, node NA transfers the slot adjustment come into force message C to the downstream node NB. node NA carries client services according to the new slot scheme. When receiving the slot adjustment come into force message C, node NB also forwards client services according to the new slot scheme. At this point, the slot adjustment between node NA and node NB is done. Similarly, when receiving the slot adjustment come into force message C from upstream node NA, node NB also transferred slot adjustment come into force message C to destination node 300. node NB carries client services according to the new slot scheme. When receiving the slot adjustment come into force message C, the destination node 300 also carries client services according to the new slot scheme. At this point, the slot adjustment between node NB and destination node 300 is done. Once the slot adjustment is completed at the destination node 300, the end-to-end slot adjustment is finished. After the slot adjustment completes at the destination node 300, the destination node 300 notifies the source node 100 that the slot adjustment is successful. If the source node 100 does not receive the adjustment success indication signal from the destination node 300 within a certain period of time, the source node 100 may send the slot adjustment come into force message C once more. Alternatively, the source node 100 may periodically send the slot adjustment come into force message C until receiving the adjustment success indication signal from the destination node 300. Therefore, intermediate node 200 needs to receive the first slot state message from the upstream node in one period and determine the second slot state message to be sent downstream for the negotiation of end-to-end slot requests.

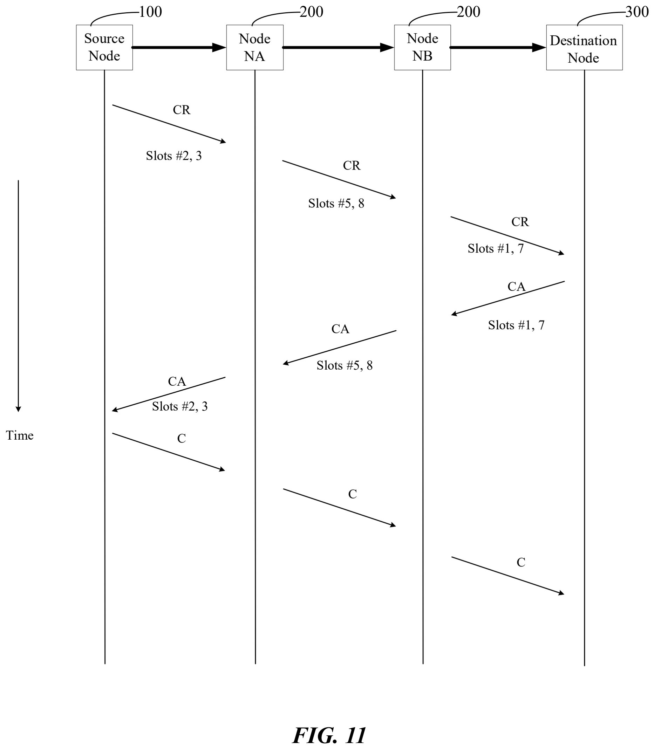

It should be noted that when both the first and second slot state messages are slot adjustment requests during a slot negotiation, the slots in the first slot state messages can be the identical or different. Referring to FIG. 11, in an example where both the source node 100 and node NA have two idle slots #2 and #3, adjustment request signal CR for slots #2 and #3 sent by the source node 100 is valid, and the added slot serial numbers are slots #2 and #3. The adjustment request signals for the rest of the slots are invalid. Slots #2 and #3 can be added between source node 100 and node NA. However, for the case between node NA and node NB, since slots #2 and #3 are already in use, only slots #5 and #8 are spare. If the preset condition is set to support different slots for the same client on different nodes to transmit services, then node NA meets the preset condition and determines the second slot state message. If the preset condition is set to allow different nodes to use the same slot for the same client to transmit services, then node NA does not meet the preset condition and sends a slot adjustment rejection message to the upstream node (i.e., source node 100). In this case, the slot in the first slot state message is different from the slot in the second slot state message.

It is noted that, for intermediate node 100, the period at which the first slot state message is received and the period at which the second slot state message is sent, is consistent with the period of source node 100. In some embodiments, a period refers to a frame period, which is associated with a fixed number of frame units. In some other embodiments, a period refers to a time period, which is associated with frame units of a fixed duration/time length.

It is noted that, an intermediate node 100, as a node between source node 100 and destination node 300, can both receive slot state message from an upstream node and send second slot state message to a downstream node, in order to help with slot negotiation and slot adjustment. Therefore, when the upstream node is the source node 100, the first slot state message thereof includes at least one of, slot adjustment request indication, slot adjustment come into force message, or slot adjustment type indication. When the upstream node is an intermediate node 200, the first slot state message thereof includes at least one of, slot adjustment request indication, slot adjustment acknowledgment indication, slot adjustment rejection message, slot adjustment come into force message, or slot adjustment type indication; the second slot state message includes at least one of, slot adjustment request indication, slot adjustment acknowledgment indication, slot adjustment rejection message, slot adjustment come into force message, or slot adjustment type indication.

Referring to FIG. 6, an intermediate node 200 determines at least one slot to be adjusted from *N* number of slots and the target adjustment state corresponding to the slot to be adjusted. The first slot state message of the slot to be adjusted carries slot adjustment request indication and slot adjustment type indication. The target adjustment state is determined according to the value of the corresponding slot adjustment type indication. When it is determined that the slot to be adjusted meets the adjustment conditions based on the slot adjustment request indication and slot adjustment type indication, the second slot state message of the slot to be adjusted is determined to be consistent with the corresponding first slot state message.

It should be noted that, referring to FIG. 6, node NA determines from the first slot state message sent by the source node NB that the slot adjustment request indication is an adjustment indication for slots #2 and #4, and the slot adjustment type indication indicates the addition of slots #2 and #3. Then, node NA determines that there are spare slots #2 and #4 between node NA and node NB based on the actual available slots, the slots requested by the upstream node, and preset conditions, such that the adjustment condition is met. In this case, the slot adjustment request indication of the second slot state message can be obtained, which indicates the adjustment for slots #2 and #4. The slot adjustment type indication indicates the addition of slots #2 and #3. As such, the second slot state message is consistent with the first slot state message.

In some embodiments, an intermediate node 200 receives third slot state messages of N number of slots sent by a downstream node in one period, with one of the third slot state messages carried by a respective one of the frame units. The intermediate node 200 obtains the third slot state message of the slot to be adjusted from the third slot state message of the N number of slots. The intermediate node 200 determines the corresponding slot adjustment acknowledgment indication or slot adjustment rejection information from the third slot state message of the slot to be adjusted, and sends the fourth slot state message of the N number of slots to an upstream node in one period. The fourth slot state message of the slot to be adjusted contains the slot adjustment acknowledgment indication or slot adjustment rejection message corresponding to the slot to be adjusted, and one of the fourth slot state messages is carried in a respective one of the frame units. In an embodiment, the period at which a fourth slot state message is sent can be the nth period (n is greater than or equal to 1) after the period at which the third slot state message is received, and the present disclosure is not limited thereto.

Referring to FIG. 5, if the destination node 300 determines that the slot adjustment request information of slot #2 and slot #4 sent by node NB meets the adjustment requirements, then the destination node 300 sends the third slot state messages of slot #2 and slot #4 to node NB. In this case, the third slot state messages of slot #2 and slot #4 each contains a slot adjustment acknowledgment indication. Therefore, in the subsequent period, node NB sends a slot adjustment acknowledgment indication to node NA corresponding to the slot adjustment request indication sent by node NA to node NB.

Referring to FIG. 9, if node NB determines that no slot is available between the destination node 300 and node NB, then node NB sends a third slot state message to node NA. If node NA determines a slot adjustment rejection message is contained, then node NA generates a corresponding fourth slot state message and sends it to the source node 100.

The response to the slot adjustment request indication sent to the downstream node through the second slot state message can be determined by the third slot state message, thus completing a negotiation.

It is noted that, when intermediate node 200 determines that the slot to be adjusted does not meet the adjustment conditions based on the slot adjustment request indication and slot adjustment type indication of the slot to be adjusted, the intermediate node 200 determines an alternative adjustment slot corresponding to the slot to be adjusted from N number of slots.

The intermediate node 200 sets the second slot state message of the alternative adjustment slot to be consistent with the first slot state message of the corresponding to the slot to be adjusted.

In practical application, due to the different content of slots configured by each node device, the number of remaining slots between devices may be inconsistent, and it is not possible to carry out end-to-end slot adjustment handshake and negotiation under the condition that the number of slots is exactly the same. In view of this, FIG. 11 illustrates an embodiment of an end-to-end communication link where the available slots for each node are not exactly the same and different nodes using different slots for service transmission is supported.

Referring to FIG. 11, both the source node 100 and node NA have two idle slots #2 and #3, adjustment request signal CR for slots #2 and #3 sent by the source node 100 is valid, and the added slot serial numbers are slots #2 and #3. The adjustment request signals for the rest of the slots are invalid. slots #2 and #3 can be added between source node 100 and node NA. For the case between node NA and node NB, slots #2 and #3 have already been used, and the negotiation to add slots 2 and 3 cannot be completed between node NA and node NB (i.e. the adjustment conditions are not met). The end-to-end negotiation stops between node NA and node NB. In order to continue the end-to-end slot adjustment negotiation, node NA selects slot #5 and slot #8 for the slot adjustment between node NA and node NB based on the available slots therebetween (i.e., the alternative slots determined by node NA are slot #5 and slot #8), although the slot serial numbers for the adjustment negotiated between the source node 100 and node NA are slot #2 and slot #3. Thus, after receiving the slot adjustment request indication sent by the source node 100, which indicates adding slot #2 and slot #3, node NA sends the adjustment request signal CR for slots #5 and #8 to node NB, indicating that the added slots are slot #5 and slot #8, and the adjustment request signals for the rest of the slots are invalid. The first slot states of slots #2 and #3 sent by the source node 100 are in one-to-one correspondence with the second slot states of the corresponding alternative adjustment slots at node NA. Similarly, node NB selects slot #1 and slot #7 for the slot adjustment between node NB and the destination node 300 based on the available slots therebetween (i.e., the alternative slots determined by node NB are slot #1 and slot #7). Thus, after receiving the slot adjustment request indication sent by node NA, which indicates adding slot #5 and slot #8, node NB sends the adjustment request signal CR for slots #1 and #7 to the destination node 300, indicating that the added slots are slot #1 and slot #7, and the adjustment request signals for the rest of the slots are invalid. After receiving the slot adjustment request signal CR for increasing slot #1 and slot #7, the destination node 300 returns the slot adjustment acknowledgment indication CA to the upstream node. The slot adjustment acknowledgment indications for slot #1 and slot #7 are valid, while the slot adjustment acknowledgment indications for the rest of the slots are invalid.

It is noted that, the third slot state messages of N number of slots sent by the downstream node are received in one period, where one of the third slot state messages is carried in a respective one of the frame units.

A third slot state message of an alternative slot to be adjusted is obtained from the third slot state messages of the N number of slots.

The corresponding slot adjustment acknowledgment indication or slot adjustment rejection message is determined from the third slot state message of an alternative slot to be adjusted.

The fourth slot state messages of the N number of slots are sent to an upstream node in one period. The fourth slot state message of the slot to be adjusted includes the slot adjustment acknowledgment indication or slot adjustment rejection message corresponding to the alternative slot to be adjusted. One of the fourth slot state messages is carried in a respective one of frame units.

Referring to FIG. 11, in an example where the intermediate node 200 is node NB, after receiving the slot adjustment request signal CR for increasing slot #1 and slot #7, the destination node 300 returns the slot adjustment acknowledgment indications CA to the upstream node. The slot adjustment acknowledgment indications for slot #1 and slot #7 are valid, while the slot adjustment acknowledgment indications for the rest of the slots are invalid. The upstream node NB receives the third slot state messages, which include slot adjustment acknowledgment indications CA, from the downstream node. The slot adjustment response acknowledgment indications CA indicate that the slot adjustment acknowledgment indication for adding slots, with the slot adjustment acknowledgment indications message of slots #1 and #7 are valid. In this case, the alternative slots to be adjusted corresponding to the third slot state messages are slots #1 and #7. The node NB sends the fourth slot state messages, which include slot adjustment acknowledgment indications CA, to the upstream node NA. The slot adjustment acknowledgment indications CA in the he fourth slot state messages indicate that the slot adjustment acknowledgment indications for adding slots, with the slot adjustment acknowledgment indications of slots #5 and #8 valid. In this case, the alternative slots to be adjusted corresponding to the fourth slot state messages are slots #5 and #8. Similarly, after receiving the slot increase adjustment acknowledgment indications CA, with the adjustment acknowledgment indications of slot #5 and slot #8 valid, the upstream node NA sends slot increase adjustment acknowledgment indications CA, with slot adjustment acknowledgment indications of slot #2 and slot #3 valid, to the upstream source node 100. After the source node 100 receives the slot increase adjustment acknowledgment indications CA from the downstream device, with slot adjustment acknowledgment indications of slot #2 and slot #3 valid, the negotiation for slot increase adjustment the source node 100, the destination node 300, and the intermediate nodes 200 is done, although the actual slot with different serial numbers are added on different nodes. The source node 100 sends the slot increase adjustment come into force message C in the subsequent period. After that, in the subsequent adjacent period, the source node 100 begins to carry client services over slots #2 and #3. Node NA receives the slot increase adjustment come into force message C. Subsequently, in subsequent adjacent period, Node NA extracts client services over slots #2 and #3, and sends the slot increase adjustment come into force message C to the downstream node NB. Subsequently, in the subsequent adjacent period, the client services are carried over slots #5 and #8 between Node NA and Node NB. When receiving the slot increase adjustment come into force message C, node NB extracts client services on slots #5 and #8 in the subsequent period. Node NB sends the slot increase adjustment come into force message C to the downstream destination node 300. In the subsequent period, client services will be carried over slots #1 and #7 between node NB and destination node 300. When receiving the slot increase adjustment come into force message C, the destination node 300 extracts client services from slots #1 and #7 in the subsequent period, thus completing the end-to-end slot addition and adjustment.

Correspondingly, for the third slot state messages that contain slot adjustment rejection message, the slot adjustment acknowledgment indications can refer to FIG. 11, in which, the alternative slot to be adjusted corresponding to the third slot state message is first determined, and then the slot to be adjusted corresponding to the fourth slot state message is determined, so as to achieve the forwarding of the correct slot state message.

It is noted that, an intermediate node 200 receives slot adjustment come into force message sent by an upstream node in one period, sends slot adjustment come into force message to a downstream node in one period, time based on the received slot adjustment come into force message, and adjusts the slot to be adjusted or alternative slot to be adjusted to the target adjustment state in the subsequent one period to the period at which the slot adjustment come into force message is sent. The slot adjustment come into force message is intended to indicate a downstream node to perform the corresponding slot adjustment policy. It should be noted that the period at which slot adjustment come into force message is sent to a downstream node can be the nth period (n is greater than or equal to 1) from the period at which the slot adjustment come into force message is received from an upstream node, and the present disclosure is not limited thereto.

Referring to FIGS. 5 and 11, if node NA receives the slot adjustment come into force message C in period T1, then node NA sends the slot adjustment come into force message C to node NB in period T2, where T1 and T2 are separated by one period.

Therefore, the first slot state messages containing the slot adjustment request indications sent by the source node 100 are transmitted to the destination node 300. After the destination node 300 sends the corresponding slot adjustment acknowledgment indication, the source node 100 sends the slot adjustment come into force message, and the intermediate node 200 forwards the slot adjustment come into force message. This ensures that the actual adjustment of the bandwidth corresponding to the slot is adjusted after the slot negotiation of each node is completed, so that the actual effective adjustment at each node is synchronized.

It is noted that, the target adjustment state includes an effective state, which indicates that the corresponding slot is enabled to carry the target client signal. Therefore, when the target adjustment state of intermediate node 200 is in an effective state, the slot to be adjusted or the alternative slot to be adjusted is added to the bearer slot set corresponding to the target client signal to obtain a new bearer slot set. The target client signal is carried through the new bearer slot set.

If the slot to be adjusted is slot #2, and the bearer slot set is {1}, then the new bearer slot set is {1,2}. If the slot to be adjusted is slot #3, and the bearer slot set is {1}, then the new bearer slot set is {1,3}.

Therefore, by assigning a slot set to each client, the slots allocated by different clients can be distinguished. By adjusting the target state to an effective state, the request for slots is identified as adding slots, thus realizing slot negotiation in the scenario of adding slots.

It is noted that, after determining the new bearer slot set, the intermediate node 200 receives the target client signal with increased bandwidth from the upstream node at the beginning of the subsequent period adjacent to the one at which the slot adjustment come into force message is sent, and carries the target client signal with increased bandwidth through the new bearer slot set.

Referring to FIGS. 7 and 13-15, in an example where after the sender sends the slot adjustment come into force message in period T1, an intermediate node 200, as the receiver, receives the slot adjustment come into force message in period T1, both the sender, and the intermediate node 200 as the receiver, will perform slot adjustment in T2, where T2 and T1 are separated by one period.

It is noted that, the target adjustment state includes an invalid state, which indicates that the corresponding slot is disabled and not used to carry the target client signal. When the target adjustment state corresponding to the slot to be adjusted is invalid, the slot to be adjusted or the alternative slot to be adjusted is deleted from the bearer slot set corresponding to the target client signal, and a new bearer slot set is obtained. At the beginning of the subsequent period adjacent to the one at which the slot adjustment come into force message is sent, the target client signal is no longer carried in the slot to be adjusted, and the target client signal is carried through the new bearer slot set.

Therefore, by identifying whether the target adjustment state is invalid or valid, the negotiation of adding or deleting slots can be achieved.

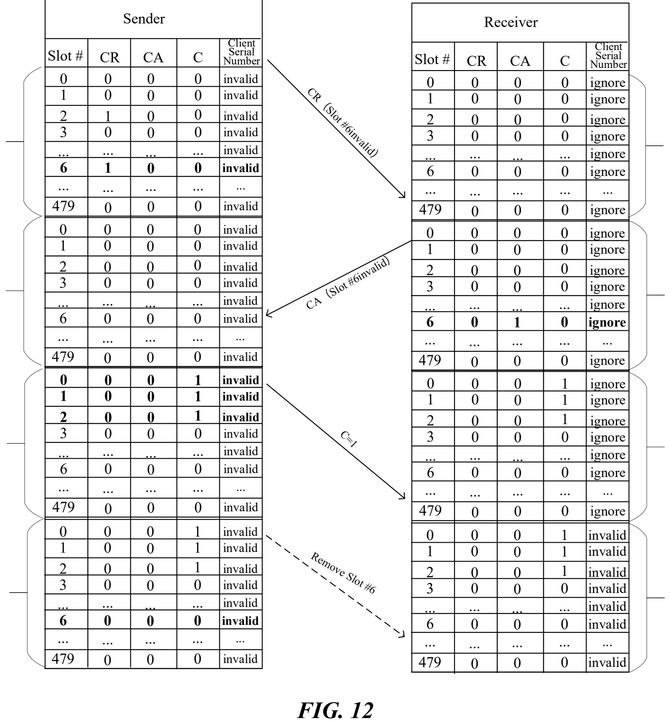

For example, when the target adjustment state is invalid, the data transmission method when the end-to-end slots are reduced is shown in FIG. 12. In this case, slot #6 of the client service needs to be deleted between the source node 100 and the node NA. The adjustment request signal CR of slot #6 sent by the source node 100 is valid, and the client number of slot #6 changes from valid to invalid, indicating that slot #6 is deleted, the adjustment request signals of the rest of the slots remain unchanged. slot #6 between the source node 100 and node NA can be disabled. After receiving the slot 6 adjustment request signal CR from the source node 100 for disabling slot #6, node NA sends a slot #6 adjustment request signal CR to node NB for disabling slot #6, and the adjustment request signal is finally transferred to the destination node 300. After receiving the slot #6 adjustment request indication CR for disabling slot #6, the destination node 300 sends the slot #6 adjustment acknowledgment indication CA to an upstream node. After receiving the slot #6 adjustment acknowledgment indication CA from the downstream node, the upstream node NB sends the slot #6 adjustment acknowledgment indication CA back to the upstream node NA. The slot #6 adjustment acknowledgment indication CA is finally transferred to the source node 100. After receiving the slot adjustment acknowledgment indication CA from the downstream device, the source node 100 determines that the source node 100, the destination node 300, and the intermediate nodes 200 on the network have completed the negotiation for the disabling adjustment of slot #6. In case that the source node 100 sends the slot adjustment come into force message C having a value of '1' in period T1, the source node 100 stops carrying client services over slot #6 in period T2 and sends client services to the downstream node in period T2. Node NA receives the slot adjustment come into force message C in period T1. Subsequently, in period T2, Node NA stops extracting client services over slot #6, and sends the slot adjustment come into force message C to the downstream node NB in period T2. Subsequently, in period T3, the client services are not carried over slot #6 between Node NA and Node NB. Similar process is performed. When receiving the slot adjustment come into force message C, the destination node 300 stops extracting client services in slot #6 in the subsequent multiframe period, thus completing the end-to-end slot disabling adjustment.

It is noted that, when the first slot state messages of N number of slots do not meet the preset condition, the intermediate node 200 sends slot adjustment rejection message to the upstream node, which includes: when it is determined, based on the slot adjustment request indication and slot adjustment type indication of the slot to be adjusted, that the slot to be adjusted does not meet the adjustment conditions and there is no corresponding alternative slot for adjustment, the intermediate node 200 sends the fifth slot state messages of *N* number of slots to the upstream node in one period, with one fifth slot state message carried in one frame unit, and the fifth slot state message of the slot to be adjusted contains the slot adjustment rejection message. In an embodiment, the period at which a fifth slot state message is sent can be the nth period (*n* is greater than or equal to 1) after the period at which the first slot state message is received, and the present disclosure is not limited thereto.

In an example, the source node 100 requests the addition of slots #2 and #3 to node NA, while slots #2 and #3 are unavailable between node NA and node NB, i.e. the adjustment conditions are not met, and there are no other two available slots between node NA and node NB (i.e., no alternative slots for adjustment). In the subsequent period, node NA sends the fifth slot state message containing slot adjustment rejection message to the source node 100.

Referring to FIG. 9, after sending the slot adjustment rejection message, the source node 100 initiates a withdrawal request to withdraw the previously negotiated slot. In this case, when an intermediate node 200 receives the sixth slot state message for the slot to be adjusted in one period, and the sixth slot state message of the slot to be adjusted includes slot adjustment request indication and slot adjustment type indication, and the value of the slot adjustment type indication is related to the opposite state of the target adjustment state, then intermediate node 200 sends the slot adjustment acknowledgment indication to the upstream node in one period. It should be noted that the period at which the slot adjustment acknowledgment indication is sent can be the nth period (n is greater than or equal to 1) after the period at which the slot adjustment request indication and slot adjustment type indication are received, and the present disclosure is not limited thereto.

In an example, taking node NA as an example, the sixth slot state message (corresponding to CR_withdraw as shown in FIG. 9) is received from source node 100 in period T1, then in period T2, slot adjustment acknowledgment indication CA is sent to source node 100 to indicate that the withdrawal was successful.

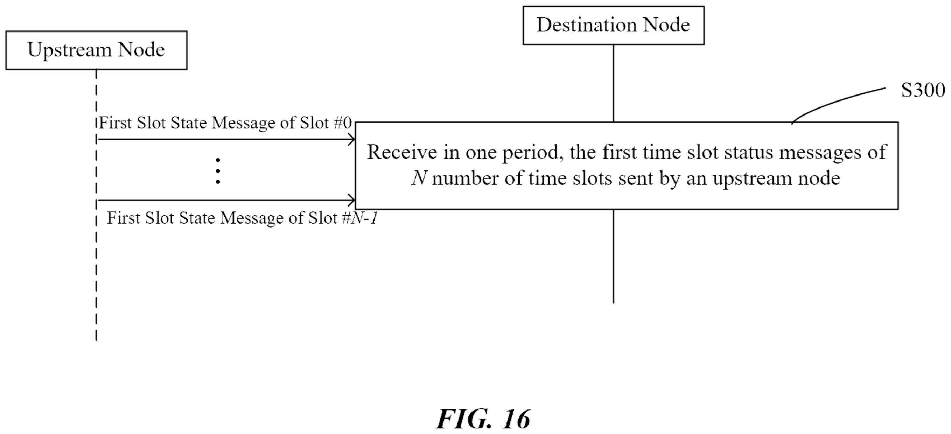

Referring to FIGS. 5 and 16, the destination node 300 performs operation S300, at which, the first slot state messages of N number of slots sent by an upstream node in one period is received. The period is associated with N number of frame units. One of the first slot state messages is carried in a respective one of the frame units. In this case, the destination node 300 can parse one of the slot request indication, slot adjustment come into force message, and slot adjustment type indication from the first slot state message, thereby determining whether the conditions for slot adjustment are met.

It should be noted that the first slot state message can be intended to request the addition of a slot, the deletion of a slot, or the withdrawal of a slot. Therefore, within a period, there may be a request for adding a slot only, a request for deleting a slot only, or any combination of the above three requests.

In an example, in a period, 480 frame units are transmitted, and a multiframe has 480 slots. Referring to FIG. 7, the destination node 300, as a receiver, receives the first slot state messages from an upstream node. This first slot state messages indicate that the CR values of slots #2 and #4 are '1', which indicates that slots #2 and #4 need to be adjusted, with the corresponding client numbers are valid for slots #2 and #4. That is, in conjunction with the client numbers and the CR values, it can be determined that the slot request indications are for slots #2, #4 and #6, and the slot adjustment type indication of slots #2 and #4 is increase/enable. Therefore, when determining that the adjustment can be made, the destination node 300 sends CA to the sender. If the sender sends a message with the value of C is '1' in period T1, then slot #2 and slot #4 will be added or enabled in period T2.

In an example, in a period, 480 frame units are transmitted, and a multiframe has 480 slots. Referring to FIG. 12, the destination node 300, as a receiver, receives the first slot state messages from an upstream node. This first slot state messages indicate that the CR value of slots #6 is '1', which indicates that slot #6 needs to be adjusted, with the corresponding client number invalid for slot #6. That is, in conjunction with the client number and the CR value, it can be determined that the slot adjustment request indication for slot #6, and the slot adjustment type indication of slot #6 delete/disable. Therefore, when determining that the adjustment can be made, the destination node 300 sends CA to the sender. If the sender sends a message with the value of C is '1' in period T1, then slot #6 will be deleted/disabled in period T2.

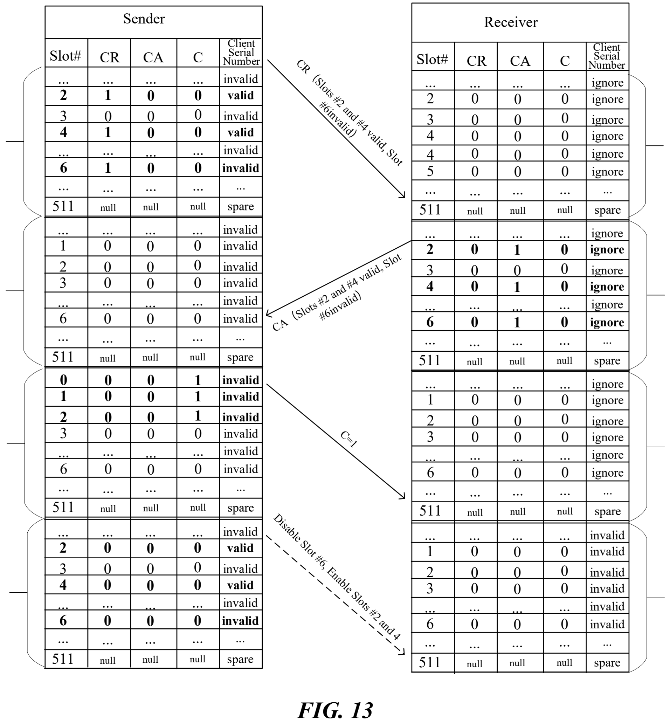

In an example, in a period, 512 frame units are transmitted, and a multiframe has 480 slots. Referring to FIG. 13, the destination node 300, as a receiver, receives the first slot state messages from an upstream node. This first slot state messages indicate that the CR values of slots #2, #4 and #6 are '1', which indicates that slots #2, #4 and #6 need to be adjusted. The corresponding client numbers for slots #2, #4 and #6 are valid, valid and invalid. That is, in conjunction with the client numbers and the CR values, it can be determined that the slot adjustment request indications are for slots #2, #4 and #6, and the slot adjustment type indications are increase/enable for slots #2 and #4, and delete/disable for slot #6. Therefore, when determining that the adjustment can be made, the destination node 300 sends CA to the sender. If the sender sends a message with the value of C is '1' in period T1, then slot #2 and slot #4 will be added or enabled, and slot #6 will be delete/disabled in period T2.

It is noted that, the reception period and the period of the corresponding acknowledgment indication in the first slot state message fed back to the upstream node of the destination node 300 are consistent with those of the upstream node. In some embodiments, a period refers to a frame period, which is associated with a fixed number of frame units. In some other embodiments, a period refers to a time period, which is associated with frame units of a fixed duration/time length.

It is noted that, after receiving the first slot state information sent by the upstream node, the destination node 300, as the end node on the same service, determines at least one slot to be adjusted from N number of slots and the target adjustment state corresponding to each slot to be adjusted. The first slot state message of the slot to be adjusted carries slot adjustment request indication and slot adjustment type indication. The target adjustment state is determined according to the value of the corresponding slot adjustment type indication. Determining whether the slot to be adjusted meets the adjustment conditions based on the slot adjustment request indication and slot adjustment type indication, and if the conditions are not met, determining whether there is a corresponding alternative slot for adjustment, includes,
- when it is determined that the slot to be adjusted meets the adjustment conditions based on the slot adjustment request and slot adjustment type of the slot to be adjusted, providing slot adjustment acknowledgment in the second slot state messages of the N number of slots sent to the upstream node in one period, with one of the second slot state messages carried over a respective one of the frame units;
- when it is determined that the slot to be adjusted does not meet the adjustment conditions based on the slot adjustment request and slot adjustment type of the slot to be adjusted, an alternative slot to be adjusted corresponding to the slot to be adjusted is identified from the N number of slots, providing a slot adjustment acknowledgment of the second slot state message of the slot to be adjusted of the second slot state messages of the *N* number of slots sent to the upstream node in one period; and
- when it is determined that the slot to be adjusted does not meet the adjustment conditions based on the slot adjustment request and slot adjustment type of the slot to be adjusted, no alternative slot to be adjusted corresponding to the slot to be adjusted is identified from the N number of slots, providing a slot adjustment rejection of the second slot state message of the slot to be adjusted of the second slot state messages of the *N* number of slots sent to the upstream node in one period.

In an embodiment, the period at which a second slot state message is sent can be the nth period (n is greater than or equal to 1) after the period at which the first slot state message is received, and the present disclosure is not limited thereto.

Referring to FIG. 11, in an example, when determining that the slot adjustment request sent by the node NB for slots #1 and #7 meets the requirements, the destination node 300 sends slot adjustment acknowledgment to node NB in the frame units corresponding to slots #1 and #7.

Referring to FIG. 11, in an example, when determining that the slot adjustment request sent by the node NB for slots #1 and #7 does not meet the requirements, and determining that the slots to be adjusted are slots #2 and #4, then the destination node 300 sends slot adjustment acknowledgment to the node NB in the frame units corresponding to slots #2 and #4.

Referring to FIG. 9, in an example, when node NB sends the first slot state message to destination node 300, no slot is available at destination node 300 corresponding to the first slot state message, then destination node 300 sends a slot adjustment rejection.

It is noted that, referring to FIG. 7, after sending the second slot state messages of the N number of slots, the destination node 300 receives the slot adjustment come into force indication from the source node in one period, and adjusts the slot to be adjusted or the alternative slot to be adjusted to the target adjustment state in the subsequent period according to the slot adjustment come into force indication.

Referring to FIG. 7, in an example, when in period T1, the destination node 300, as a receiver, receives the slot adjustment come into force indication C , then the destination node 300 adjusts the slot to be adjusted of the alternative slot to be adjusted to the target adjustment state, in period T2.

It is noted that, the destination node 300 determines that the target adjustment state includes an effective state, which indicates that the corresponding slot is enabled to carry the target client signal. Then, the destination node 300 adds the slot to be adjusted or the alternative slot to be adjusted to the bearer slot set corresponding to the target client signal to obtain a new bearer slot set, and carries the target client signal through the new bearer slot set.

If the slot to be adjusted is slot #2, and the bearer slot set is {3}, then the new bearer slot set is {2,3}. If the alternative slot to be adjusted is slot #4, and the bearer slot set is {3}, then the new bearer slot set is {3, 4}.

It is noted that, if the destination node 300 determines that the target adjustment state includes an invalid state indicating that the slot of interest is to be disabled and not used to carry the target client signal, then the destination node 300 removes the slot to be adjusted or the alternative slot to be adjusted from the bearer slot set corresponding to the target client signal.

If the slot to be adjusted is slot #2, and the bearer slot set is {2, 3}, then the new bearer slot set is {3}. If the alternative slot to be adjusted is slot #4, and the bearer slot set is {3, 4}, then the new bearer slot set is {3}.

It is understood that the method set forth in the present disclosure can be applied to both the adding and deleting slots for multiple clients. As shown in FIG. 13, in an example where the available slots of each node are the same, client A adds slot #2 and slot #4, client B removes slot #6, and the source node 100 sets the CR value of slot #2, slot #4 and slot #6 to '1' within the period. As such, the client numbers of slot #2 and slot #4 changes from invalid to valid, and slot #2 and slot #4 are added or enabled. The client number of slot #6 changes from valid to invalid, then slot 6 is deleted or disabled. Node NA and Node NB forward the adjustment requests to the destination node 300 in sequence. After receiving the requests for all slots, the destination node 300 returns the acknowledgment indications CA, and only the acknowledgments CA for slots #2, #4, and #6 are valid, the acknowledgments for the rest of the slots are invalid. Node NB and Node NA forward the acknowledgments to the source node 100 in sequence. After receiving all slot adjustment acknowledgment indications CA, the source node 100 transmits adjustment indication C in the subsequent period , and adds or enables slot #2 and slot #4 and deletes or disable slot #6 in the next subsequent multiframe.

It is noted that, according to the method set forth in the present disclosure, the adjustments of multiple slots can be negotiated in one period or in multiple period, and the present disclosure is not limited thereto. For example, in Scenario 1, all slot adjustment request indications are transmitted within one multiframe. However, some frames may be damaged due to bit errors, resulting in a failure in transmission of certain adjustment request indications from the sender device to the receiver. In such a case, slot negotiation for multiple slots can be completed through multiple periods. For another example, in scenario 2, upon receiving the adjustment request indication, it is necessary to prepare and allocate the corresponding slot for the adjustment request. Only when the requested slot satisfies the requirements and the adjustment preparation is completed can the CA acknowledgment indication be transmitted. However, if only certain slots meet the requirements and the adjustment preparation of those slots has been completed, the acknowledgment indications CA for those slots are returned. For slot adjustment requests that are not yet ready, the acknowledgment indications CA are not returned in the current period. For another example, in scenario 3, if, after transmitting all slots to be adjusted in one period, it is determined that new slots need to be added for adjustment or that the adjustment state of certain slots has changed, the new slot adjustment state must be retransmitted.

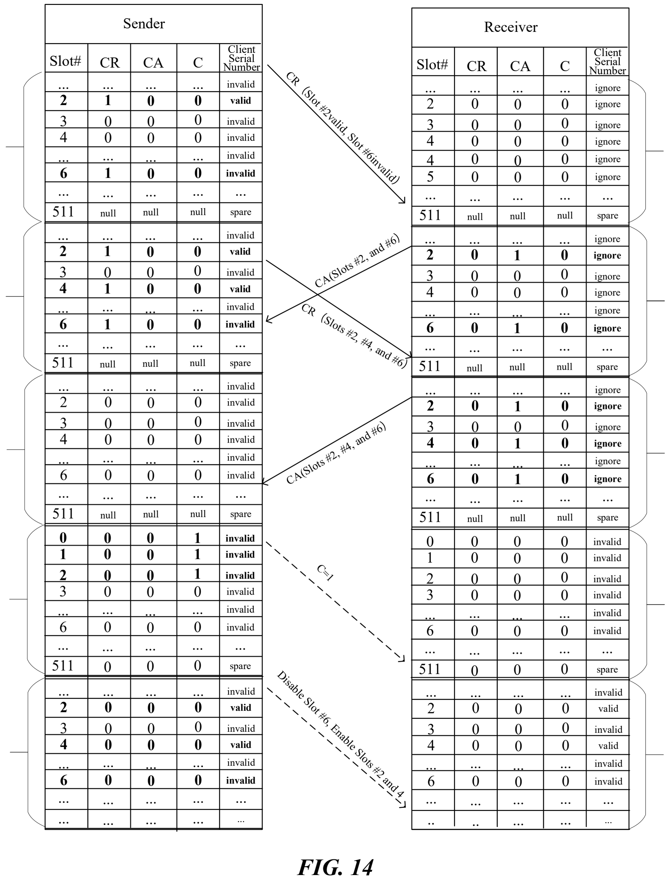

It is noted that, when the method of the present disclosure employs multiple periods to jointly negotiate and complete the slot negotiation process for multiple slots, the following negotiation methods may be used. Method 1 is a single non-incremental method, in which in a new period only the newly added slot adjustment request indications and the slot adjustment acknowledgment indications are transmitted, without retransmitting the slot adjustment request indications and the slot acknowledgment indications that have already been transmitted in the previous multiframe. Specifically, if slots #2, #4, and #6 are adjusted, then in the first period only the adjustment request indication and acknowledgment indication for slot #2 are transmitted. In the second period only the adjustment request indication and acknowledgment indication for slot #4 are transmitted. In the third period, only the adjustment request indication and acknowledgment indication for slot #6 are transmitted. Method 2 is an incremental method, in which all adjusted slots from the previous multiframe, together with the newly added slot adjustment request indication and acknowledgment indication in the current multiframe, are retransmitted in a new period. In the final period, the adjustment indication and acknowledgment indication for all slots are transmitted. In particular, as shown in FIG. 14, if slots #2, #4, and #6 are adjusted, in the first period, the adjustment indication and acknowledgment indication for slots #2 and #4 are sent. In the second period, the adjustment request indication and acknowledgment indication for slots #2, #4, and #6 are sent.

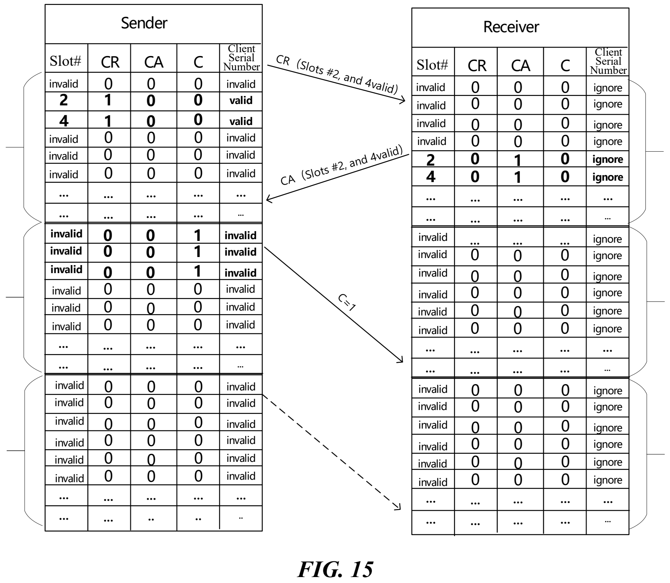

It should be noted that, as illustrated in FIGS. 7 and 12-14, the sender and receiver periodically perform the negotiation and slot adjustment. The adjustment request indications for all slots are transmitted within one period, and the acknowledgment indications for all slots are returned within one period. Within one period, the adjustment request indications (including slots that participate in the adjustment and those that do not) and the adjustment acknowledgment indications (including slots that participate in the adjustment and those that do not) are indicated for all slots. For slots that are not involved in the adjustment, their specific slot serial numbers may also be explicitly indicated. In practical applications, as illustrated in FIG. 15, only the slot serial numbers for slots involved in the adjustment may be transmitted. For slots not involved in the adjustment, their specific slot serial numbers may be omitted, as shown in FIG. 15. For example, if only slots #2 and #4 are adjusted, the sender transmits only the slot serial numbers of slots #2 and #4 along with the slot adjustment request (CR) indications and adjustment addition/deletion indications. The serial numbers of the rest slots are not transmitted, and remain null or invalid. When transmitting the acknowledgment indications, only the slot serial numbers of slots #2 and #4, together with the slot adjustment acknowledgment indications CA of those slots, are returned. The slot serial numbers and adjustment acknowledgment indications CA for the rest slots are not transmitted, and the slot state message of those slots remains null or invalid. For slots that do not participate in the slot adjustment, the embodiment where the slot serial number and adjustment request indications are transmitted or not transmitted, are within the scope of the present disclosure.

It should be noted that, as illustrated in FIGS. 7 and 12-15, changing the client serial number of a corresponding slot from an invalid number to a valid number indicates the addition of a slot of interest, while changing the client serial number from a valid number to an invalid number indicates the deletion of a slot of interest. In practical applications, in addition to using the client serial number change to indicate a request to add or delete a slot, other methods may also be employed. For example, an overhead indicator bit may be set to represent addition and deletion for a slot of interest. These signals may be used directly to indicate whether a slot is requested for an addition adjustment or a deletion adjustment. Different indication methods fall within the scope of the present disclosure.

It should be noted that the slots shown in each period in FIGS. 7 and 12 to 15 are merely illustrative examples. When the number of frame units that can be transmitted in a period differs, negotiation may be performed by reference to the slot negotiation operations depicted in FIGS. 7 and 12 to 15.

It is noted that in the above-described embodiments, the description of each embodiment focuses on a respective aspect. Those portions that are not detailed or recited in one embodiment, can be referred to the relevant descriptions of other embodiments.

According to an embodiment of the present disclosure, an electronic device is provided, which includes:
- at least one processor 601; and
- a memory 602 storing at least one program thereon, which when executed by the processor 601, causes the processor 601 to carry out:
   - the method applied to the source node 100; or,
   - the method applied to an intermediate node 200; or,
   - the method applied to the destination node 300.

The memory 602, implemented as a non-transitory storage medium within the network system, may be used to store non-transitory software programs and non-transitory computer-executable instructions. In addition, the memory 602 can include high-speed random-access memory and non-transitory memory, such as at least one disk memory device, flash memory device, or other non-transitory solid-state memory devices. In some implementations, the memory 602 may include memories remotely located relative to the processor 601, and these remote memories 602 may be connected to the processor 601 through a network. Examples of the above networks include, but are not limited to, the Internet, intranet, local area network, mobile communication network, and combinations thereof.

The memory 602 may be implemented as read-only memory (ROM), a static storage device, a dynamic storage device, or random access memory (RAM). The memory 602 may store the operating system and other programs. When the technical schemes described in the embodiments of the present specification are implemented in the form of software or firmware, the corresponding program code is stored in the memory 602 and invoked by the processor 601 to cause the processor 601 to execute the methods of the embodiments of the present disclosure.

The processor 601 may be implemented using a general-purpose central processing unit (CPU), a microprocessor, an application-specific integrated circuit (ASIC), or one or more integrated circuits, and is configured to execute programs for implementing the technical schemes described in the embodiments of the present disclosure.

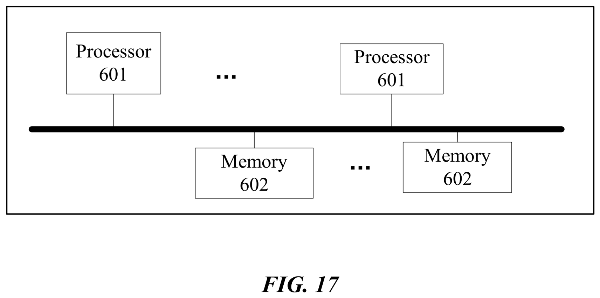

In some embodiments, referring to FIG. 17, the electronic device further includes:
- input/output interfaces configured to perform information input and output;
- a communication interface configured to enable communication and interaction between the device and other devices, e.g., through wired connections (such as USB or Ethernet) or wireless connections (such as a mobile network, Wi-Fi, or Bluetooth); and
- a bus configured to transmit information between various components of the device, such as the processor 601, the memory 602, the input/output interfaces, and the communication interfaces.

The processor 601, the memory 602, the input/output interface, and the communication interface may communicate with one another within the device via the bus.

According to an embodiment of the present disclosure, a computer-readable storage medium is provided, which stores computer-executable instructions for performing:
- the method applied to the source node 100; or,
- the method applied to an intermediate node 200; or,
- the method applied to the destination node 300.

According to an embodiment of the present disclosure, a computer program product is provided. The computer program product includes a computer program or a computer instruction stored in a computer-readable storage medium which, when executed by a processor of a computer device, causes the computer device to carry out:
- the method applied to the source node 100; or,
- the method applied to an intermediate node 200; or,
- the method applied to the destination node 300.

The system architecture and application scenarios described in an embodiment of the present disclosure are intended for better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Some embodiments of the embodiments of the present disclosure are illustrated above in conjunction with the drawings, and the present disclosure are not limited thereto. Any modification, equivalent substitution and improvement made by those skilled in the art without departing from the scope and essence of the invention should be within the scope of the present disclosure.

## Claims

1. A method for transmitting slot messages, applied to a source node, the method comprising:
sending first slot state messages of N number of slots to a downstream node within one period, wherein the period is associated with N number of frame units, and one of the first slot state messages is carried over a respective one of the frame units.

2. The method as claimed in claim 1, wherein the period is a frame period, which is associated with a fixed number of frame units; or the period is a time period, which is associated with the frame units having a fixed duration.

3. The method as claimed in claim 1, wherein each of the first slot state messages comprises at least one of, a slot adjustment request indication, a slot adjustment come into force indication, or a slot adjustment type indication.

4. The method as claimed in claim 1, wherein before sending the first slot state messages of the *N* number of slots to the downstream node within one period, the method comprises:
determining a slot to be adjusted from the *N* number slots and a target adjustment state corresponding to the slot to be adjusted;
providing a slot adjustment request indication in the first slot state message corresponding to the slot to be adjusted, wherein the slot adjustment request indication indicates a request for adjustment of the slot to be adjusted; and
providing a slot adjustment type indication in the first slot state message corresponding to the slot to be adjusted, wherein the slot adjustment type has a value corresponding to the target adjustment state corresponding to the slot to be adjusted.

5. The method of claim 4, further comprising,
receiving within one period, second slot state messages of the *N* number of slots sent by the downstream node, wherein, one of the second slot state messages is carried over a respective one of the frame units;
acquiring a second slot state message of the slot to be adjusted, from the second slot state messages of the *N* number of slots; and
sending a slot adjustment come into force indication to the downstream node in one period, in response to a determination that the second slot state message of the slot to be adjusted contains a slot adjustment acknowledgment indication, and adjusting the slot to be adjusted to the target adjustment state in a subsequent one period adjacent to the period at which the slot adjustment come into force indication is sent;
wherein the slot come into force indication is intended to indicate the downstream node to perform a corresponding slot adjustment.

6. The method as claimed in claim 5, wherein the slot adjustment come into force indication is carried over at least one of the frame units within the period.

7. The method as claimed in claim 5, wherein the target adjustment state comprises a valid state which indicates enabling a corresponding slot to carry a target client signal, and adjusting the slot to be adjusted to the target adjustment state comprises:
adding the slot to be adjusted to a bearer slot set corresponding to the target client signal, to obtain a new bearer slot set, in response to a determination that the target adjustment state corresponding to the slot to be adjusted is valid; and
carrying the target client signal over the new bearer slot set.

8. The method as claimed in claim 7, wherein after carrying the target client signal over the new bearer slot set, the method comprises:
increasing a bandwidth for the target client signal to obtain the target client signal with increased bandwidth, from a subsequent one period to the period at which the slot adjustment come into force indication is sent; and
carrying the target client signal with increased bandwidth over the new bearer slot set.

9. The method as claimed in claim 5, wherein the target adjustment state comprises an invalid state which indicates preventing a corresponding slot from carrying a target client signal, and adjusting the slot to be adjusted to the target adjustment state comprises:
deleting the slot to be adjusted from a bearer slot set corresponding to the target client signal, to obtain a new bearer slot set, in response to a determination that the target adjustment state corresponding to the slot to be adjusted is invalid; and
preventing carrying the target client signal over the slot to be adjusted, and carrying target client signal over the new bearer slot set, from a subsequent one period to the period at which the slot adjustment come into force message is sent.

10. The method as claimed in claim 5, wherein the slot adjustment acknowledgment indication is directly from a destination node, or is generated by the destination node and forwarded by the intermediate node.

11. The method of claim 5, further comprising,
providing a slot adjustment request indication and a slot adjustment type indication in a sixth slot state message corresponding to the slot to be adjusted among a plurality of sixth slot state messages of the N number of slots sent to the downstream node in one period, in response to determining that the second slot state message of the slot to be adjusted contains a slot adjustment rejection indication, wherein the slot adjustment request indication has a value related to an opposite state of the target adjustment state; and one of the sixth slot state messages is carried over a respective one of the frame units;
wherein the slot adjustment rejection indication comes directly from an intermediate node or from a destination node; or, the slot adjustment rejection indication is generated by the intermediate node and forwarded by an additional intermediate node; or, the slot adjustment rejection indication is generated by the destination node and forwarded by the intermediate node.

12. The method of claim 11, further comprising,
repeatedly or periodically sending the slot adjustment request indication and slot adjustment type indication corresponding to the slot to be adjusted through one or more subsequent periods until receiving the slot adjustment acknowledgment indication or slot adjustment rejection indication corresponding to the slot to be adjusted, in response to determining that the slot adjustment acknowledgment information or slot adjustment rejection indication is absent from the second slot state message of the slot to be adjusted.

13. A method for transmitting slot messages, applied to an intermediate node, the method comprising:
receiving in one period, first slot state messages of *N* number of slots sent by an upstream node, wherein the period is associated with *N* number of frame units, and each of the first slot state messages is carried over a respective one of the frame units;
determining second slot state messages of the *N* number of slots, in response to determining that the first slot state messages of the *N* number time of slots meet a preset condition, and sending within one period, the second slot state messages of the *N* number time of slots to the downstream node, wherein each of the second slot state messages is carried over a respective one of the frame units; and
sending a slot adjustment rejection indication to the upstream node, in response to determining that the first slot state messages of the *N* slots do not meet the preset condition.

14. The method as claimed in claim 13, wherein the period is a frame period, which is associated with a fixed number of frame units; or the period is a time period, which is associated with the frame units having a fixed duration.

15. The method as claimed in claim 14, wherein at least one of the first slot state messages and the second slot state messages comprises at least one of, a slot adjustment request indication, a slot adjustment come into force indication, or a slot adjustment type indication.

16. The method as claimed in claim 14, wherein determining second slot state messages of the *N* number of slots in response to determining the first slot state messages of the *N* number of slots meet a preset condition, which comprises:
determining a slot to be adjusted from the N number of slots and a target adjustment state corresponding to the slot to be adjusted, wherein the first slot state message of the slot to be adjusted carries a slot adjustment request indication and a slot adjustment type indication, the target adjustment state is determined according to a value of the slot adjustment type indication; and
determining that the second slot state message of the slot to be adjusted is consistent with the corresponding first slot state message, in response to determining that the slot to be adjusted meets an adjustment condition based on the slot adjustment request indication and the slot adjustment type indication.

17. The method as claimed in claim 16, wherein after sending the second slot state messages of the *N* number of slots to the downstream node within one period, the method comprises:
receiving within one period, third slot state messages of the *N* number of slots sent by the downstream node, wherein, one of the third slot state messages is carried over a respective one of the frame units;
acquiring a third slot state message of the slot to be adjusted from the third slot state messages of the *N* number of slots;
determining a corresponding slot adjustment acknowledgment indication or slot adjustment rejection indication from the third slot state message of the slot to be adjusted; and
sending fourth slot state messages of the *N* number of slots to the upstream node in one period, wherein the fourth slot state message of the slot to be adjusted comprises the slot adjustment acknowledgment indication or the slot adjustment rejection indication corresponding to the slot to be adjusted, and one of the fourth slot state messages is carried over a respective one of the frame units.

18. The method as claimed in claim 16, wherein determining second slot state messages of the *N* number of slots in response to determining the first slot state messages of the *N* number of slots meet a preset condition, further comprises:
determining from the *N* number of slots, an alternative slot to be adjusted corresponding to the slot to be adjusted, in response to determining that the slot to be adjusted does not meet the adjustment condition based on the slot adjustment request indication and slot adjustment type indication of the slot to be adjusted; and
setting the second slot state message of the alternative slot to be adjusted to be consistent with the first slot state message of the slot to be adjusted.

19. The method as claimed in claim 18, wherein after sending the second slot state messages of the *N* number of slots to the downstream node within one period, the method comprises:
receiving within one period, third slot state messages of the *N* number of slots sent by the downstream node, wherein, one of the third slot state messages is carried over a respective one of the frame units;
acquiring a third slot state message of the alternative slot to be adjusted from the third slot state messages of the *N* number of slots;
determining a corresponding slot adjustment acknowledgment indication or a slot adjustment rejection indication from the third slot state message of the alternative slot to be adjusted; and
sending in one period, fourth slot state messages of the *N* number of slots to the upstream node, wherein the fourth slot state message of the alternative slot to be adjusted comprises the slot adjustment acknowledgment indication or the slot adjustment rejection indication corresponding to the alternative slot to be adjusted, and one of the fourth slot state messages is carried over a respective one of the frame units.

20. The method as claimed in claim 18, wherein after sending the second slot state messages of the *N* number of slots to the downstream node within one period, the method comprises:
receiving in one period, a first slot adjustment come into force indication sent by the upstream node; and
sending in one period, a second slot adjustment come into force indication to the downstream node, based on the first slot adjustment come into force indication, and adjusting the slot to be adjusted or the alternative slot to be adjusted to the target adjustment state in a subsequent one period adjacent to the period at which the second slot adjustment come into force indication is sent;
wherein the slot come into force indication is intended to indicate the downstream node to perform a corresponding slot adjustment.

21. The method as claimed in claim 20, wherein the target adjustment state comprises a valid state which indicates enabling a corresponding slot to carry a target client signal, and adjusting the slot to be adjusted or the alternative slot to be adjusted to the target adjustment state comprises:
adding the slot to be adjusted or the alternative slot to be adjusted to a bearer slot set corresponding to the target client signal, to obtain a new bearer slot set, in response to a determination that the target adjustment state is a valid state; and
carrying the target client signal over the new bearer slot set.

22. The method as claimed in claim 21, wherein after carrying the target client signal over the new bearer slot set, the method comprises:
receiving the target client signal with increased bandwidth from the upstream node, and carrying the target client signal with increased bandwidth over the new bearer slot set, from a subsequent one adjacent to the period at which the second slot adjustment come into force indication is sent.

23. The method as claimed in claim 20, wherein the target adjustment state comprises an invalid state which indicates preventing a corresponding slot to carry a target client signal, and adjusting the slot to be adjusted or the alternative slot to be adjusted to the target adjustment state comprises:
deleting the slot to be adjusted or the alternative slot to be adjusted from the bearer slot set corresponding to the target client signal, to obtain a new bearer slot set, in response to a determination that the target adjustment state corresponding to the slot to be adjusted is the invalid state; and
preventing carrying the target client signal over the slot to be adjusted, and carrying target client signal over the new bearer slot set, from a subsequent one period to the period at which the second slot adjustment come into force message is sent.

24. The method as claimed in claim 16, wherein sending a slot adjustment rejection indication to the upstream node, in response to determining that the first slot state messages of the *N* slots do not meet the preset condition, which comprises:
sending within one period, fifth slot state messages of the *N* number of slots to the upstream node, in response to determining based on the slot adjustment request indication and the slot adjustment type indication of the slot to be adjusted, that the slot to be adjusted does not meet the adjustment conditions and an alternative slot for adjustment is absent, wherein one of the fifth slot state messages is carried over a respective one of the frame units, and the fifth slot state message of the slot to be adjusted contains the slot adjustment rejection indication.

25. The method as claimed in claim 24, wherein after sending within one period the fifth slot state messages of the *N* number of slots to the downstream node, the method comprises:
sending within one period, the slot adjustment acknowledgment indication to the upstream node, in response to determining that a sixth slot state message of the slot to be adjusted is received in one period, the sixth slot state message of the slot to be adjusted comprises the slot adjustment request indication and slot adjustment type indication, and the slot adjustment type indication has a value related to an opposite state of the target adjustment state.

26. A method for transmitting slot messages, applied to a destination node, the method comprising:
receiving in one period, first slot state messages of *N* number of slots sent by an upstream node, wherein the period is associated with *N* number of frame units, and each of the first slot state messages is carried over a respective one of the frame units.

27. The method as claimed in claim 26, wherein the period is a frame period, which is associated with a fixed number of frame units; or the period is a time period, which is associated with frame units having a fixed duration.

28. The method as claimed in claim 26, wherein the first slot state messages comprise at least one of, a slot adjustment request indication, a slot adjustment come into force indication, or a slot adjustment type indication.

29. The method as claimed in claim 26, wherein after receiving within one period the first slot state messages of the N number of slots sent by the upstream node, the method comprises:
determining a slot to be adjusted from the *N* number of slots and a target adjustment state corresponding to the slot to be adjusted, wherein the first slot state message of the slot to be adjusted carries a slot adjustment request indication and a slot adjustment type indication, the target adjustment state is determined according to a value of the slot adjustment type indication;
providing slot adjustment acknowledgment in a second slot state message of the slot to be adjusted among second slot state messages of the *N* number of slots sent to the upstream node in one period, with one of the second slot state messages carried over a respective one of the frame units, in response to determining that the slot to be adjusted meets the adjustment conditions based on the slot adjustment request and slot adjustment type of the slot to be adjusted,
or,
providing a slot adjustment acknowledgment of the second slot state message of the slot to be adjusted among the second slot state messages of the *N* number of slots sent to the upstream node in one period, in response to determining that the slot to be adjusted does not meet the adjustment conditions based on the slot adjustment request and slot adjustment type of the slot to be adjusted, and identifying an alternative slot to be adjusted corresponding to the slot to be adjusted from the *N* number of slots,
or,
providing a slot adjustment rejection of the second slot state message of the slot to be adjusted among the second slot state messages of the *N* number of slots sent to the upstream node in one period, in response to determining that the slot to be adjusted does not meet the adjustment conditions based on the slot adjustment request and slot adjustment type of the slot to be adjusted, and identifying no alternative slot to be adjusted corresponding to the slot to be adjusted from the *N* number of slots.

30. The method of claim 29, further comprising,
receiving within one period, a slot adjustment come into force indication from a source node after sending the second slot state messages of the N number of slots; and
adjusting the slot to be adjusted or the alternative adjustment slot to the target adjustment state in a subsequent one period, based on the slot adjustment come into force indication.

31. The method as claimed in claim 30, wherein the target adjustment state comprises a valid state which indicates enabling a corresponding slot to carry a target client signal, and adjusting the slot to be adjusted or the alternative slot to be adjusted to the target adjustment state comprises:
adding the slot to be adjusted or the alternative slot to be adjusted to a bearer slot set corresponding to the target client signal, to obtain a new bearer slot set, in response to a determination that the target adjustment state is a valid state; and
carrying the target client signal over the new bearer slot set.

32. The method as claimed in claim 30, wherein the target adjustment state comprises an invalid state which indicates preventing a corresponding slot to carry a target client signal, and adjusting the slot to be adjusted or the alternative slot to be adjusted to the target adjustment state comprises:
deleting the slot to be adjusted or the alternative adjustment slot from a bearer slot set corresponding to the target client signal, in response to determining that the target adjustment state corresponding to the slot to be adjusted is the invalid state.

33. An electronic device, comprising,
at least one processor; and
a memory storing at least one program thereon, which when executed by the processor, causes the processor to carry out
the method as claimed in any one of claims 1-12; or,
the method as claimed in any one of claims 13-25; or,
the method as claimed in any one of claims 26 to 32.

34. A computer-readable medium storing a computer program thereon, which when executed by a processor, causes the processor to carry out
the method as claimed in any one of claims 1-12; or,
the method as claimed in any one of claims 13-25; or,
the method as claimed in any one of claims 26 to 32.
